(19) Europäisches Patentamt
European Patent Office
Office européen des brevets

(11) EP 4 238 156 B1

(12) FASCICULE DE BREVET EUROPEEN

(45) Date de publication et mention de la délivrance du brevet:
**01.04.2026 Bulletin 2026/14**

(21) Numéro de dépôt: **21811411.4**

(22) Date de dépôt: **28.10.2021**

(51) Classification Internationale des Brevets (IPC):
***H01M 4/60** (2006.01)* ***H01M 10/04** (2006.01)*
***H01M 10/052** (2010.01)* ***H01M 10/054** (2010.01)*
***H01M 10/0585** (2010.01)* *H01M 4/02 (2006.01)*

(52) Classification Coopérative des Brevets (CPC):
**H01M 4/60; H01M 10/0418; H01M 10/044; H01M 10/052; H01M 10/054; H01M 10/0585;**
H01M 2004/029; H01M 2300/0085; Y02E 60/10; Y02P 70/50

(86) Numéro de dépôt international:
**PCT/FR2021/051901**

(87) Numéro de publication internationale:
**WO 2022/090669 (05.05.2022 Gazette 2022/18)**

(54) **ACCUMULATEUR ÉLECTROCHIMIQUE À ARCHITECTURE BIPOLAIRE COMPORTANT, COMME MATÉRIAU ACTIF D'ÉLECTRODE, UN MATÉRIAU COMMUN À TOUTES LES ÉLECTRODES**

ELEKTROCHEMISCHE BATTERIE MIT BIPOLARER ARCHITEKTUR MIT EINEM FÜR ALLE ELEKTRODEN GEMEINSAMEN MATERIAL ALS AKTIVES ELEKTRODENMATERIAL

ELECTROCHEMICAL BATTERY WITH A BIPOLAR ARCHITECTURE COMPRISING A MATERIAL COMMON TO ALL OF THE ELECTRODES AS ELECTRODE ACTIVE MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.11.2020 FR 2011222**

(43) Date de publication de la demande:
**06.09.2023 Bulletin 2023/36**

(73) Titulaire: **Commissariat à l'Energie Atomique et aux Energies Alternatives**
**75015 Paris (FR)**

(72) Inventeurs:
- **GUTEL, Thibaut**
**38054 GRENOBLE CEDEX 09 (FR)**
- **SALOMON, Jérémie**
**38054 GRENOBLE CEDEX 09 (FR)**
- **SARTRE, Adrien**
**38054 GRENOBLE CEDEX 09 (FR)**

(74) Mandataire: **Santarelli**
**Tour Trinity**
**1 bis Place de la Défense**
**92400 Courbevoie (FR)**

(56) Documents cités:
**CN-A- 103 035 942 JP-A- 2016 076 342**

- **NOBUHIRO OGIHARA ET AL: "Organic Dicarboxylate Negative Electrode Materials with Remarkably Small Strain for High-Voltage Bipolar Batteries", ANGEWANDTE CHEMIE INTERNATIONAL EDITION, vol. 53, no. 43, 4 September 2014 (2014-09-04), DE, pages 11467 - 11472, XP055557423, ISSN: 1433-7851, DOI: 10.1002/anie.201405139**
- **TONG LIUCHUAN ET AL: "Symmetric All-Quinone Aqueous Battery", vol. 2, no. 6, 24 June 2019 (2019-06-24), pages 4016 - 4021, XP055830532, ISSN: 2574-0962, Retrieved from the Internet <URL:https://scholar.harvard.edu/files/liuchuantong/files/maintext.pdf> [retrieved on 20190702], DOI: 10.1021/acsaem.9b00691**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **LU YONG ET AL: "Prospects of organic electrode materials for practical lithium batteries", NATURE REVIEWS CHEMISTRY, NATURE PUBLISHING GROUP UK, LONDON, vol. 4, no. 3, 12 February 2020 (2020-02-12), pages 127 - 142, XP037060109, DOI: 10.1038/S41570-020-0160-9**

## Description

### DOMAINE TECHNIQUE

L'invention se rapporte au domaine des accumulateurs électrochimiques à architecture bipolaire comportant, comme matériau actif d'électrodes, un matériau commun à toutes les électrodes.
Le domaine général de l'invention peut être défini comme celui des dispositifs de stockage d'énergie, en particulier, celui des accumulateurs électrochimiques.

### ÉTAT DE LA TECHNIQUE

Les accumulateurs électrochimiques fonctionnent sur le principe de cellules électrochimiques aptes à délivrer un courant électrique grâce à la présence dans chacune d'entre elles d'un couple d'électrodes (respectivement, une électrode positive et une électrode négative) séparées par un électrolyte, les électrodes comprenant des matériaux spécifiques aptes à réagir selon une réaction d'oxydo-réduction, moyennant quoi il y a production d'électrons à l'origine du courant électrique et productions d'ions qui vont circuler d'une électrode à l'autre par le biais d'un électrolyte.
Parmi les accumulateurs souscrivant à ce principe, il peut être fait mention :

- des accumulateurs acide-plomb utilisant du plomb et de l'oxyde de plomb $PbO_2$ comme matériaux actifs d'électrode ;
- des accumulateurs Ni-MH utilisant de l'hydrure métallique et de l'oxyhydroxyde de nickel comme matériaux actifs d'électrode ;
- des accumulateurs utilisant du nickel ou un composé à base de nickel pour constituer le matériau actif d'au moins une des électrodes, tels que les accumulateurs Ni-MH utilisant, en particulier un hydrure métallique et de l'oxyhydroxyde de nickel comme matériaux actifs d'électrode ; les accumulateurs Ni-Cd utilisant du cadmium et de l'oxyhydroxyde de nickel comme matériaux actifs d'électrode ou des accumulateurs nickel-zinc utilisant de l'hydroxyde de nickel et de l'oxyde de zinc comme matériaux actifs d'électrode ; et
- des accumulateurs fonctionnant sur le principe d'insertion-désinsertion d'un élément alcalin ou alcalino-terreux intervenant au niveau des électrodes (et plus spécifiquement, des matériaux actifs d'électrodes), des accumulateurs souscrivant à ce principe et utilisés actuellement étant les accumulateurs du type lithium-ion utilisant, en tout ou partie, des matériaux lithiés pour constituer les matériaux actifs d'électrode.

Depuis quelques années, ces accumulateurs Li-ion ont détrôné largement les autres accumulateurs mentionnés ci-dessus du fait de l'amélioration continue des performances des accumulateurs Li-ion en termes de densité d'énergie. En effet, les accumulateurs lithium-ion permettent d'obtenir des densités d'énergie massique et volumique (pouvant être supérieures à 180 $Wh.kg^{-1}$) nettement supérieures à celles des accumulateurs Ni-MH et Ni-Cd (pouvant aller de 50 et 100 $Wh.kg^{-1}$) et Acide-plomb (pouvant aller de 30 à 35 $Wh.kg^{-1}$).
A l'heure actuelle, le marché des accumulateurs lithium-ion est dominé par une architecture dite « monopolaire », c'est-à-dire une architecture dans laquelle un accumulateur ne comporte qu'une seule cellule électrochimique qui utilise, par exemple, une électrode positive à base d'oxyde de cobalt lithié ($LiCoO_2$) et une électrode négative à base de graphite, séparée l'une de l'autre par un constituant électrolytique (généralement, un séparateur imprégné par un électrolyte liquide) conducteur d'ions lithium, la tension nominale de ces accumulateurs étant de l'ordre de 3,6 V.
Avec une telle architecture, pour obtenir une tension importante, il est donc nécessaire d'associer en série plusieurs accumulateurs monocellulaires *via* des connexions extérieures.
En contrepartie de cette architecture monopolaire, une nouvelle génération d'accumulateurs à architecture dite bipolaire fait l'objet d'études depuis plusieurs années.
Des accumulateurs à architecture bipolaire comprennent, comme illustré sur la figure 1 jointe en annexe, deux substrats collecteurs de courant terminaux 1, 3 et un empilement de cellules électrochimiques ($C_1$, $C_2$, ..., $C_n$) qui comprennent, chacune, une électrode positive 5, une électrode négative 7 et un séparateur 9 intercalé entre l'électrode positive et l'électrode négative en présence d'un électrolyte conducteur d'ions lithium, lorsque l'accumulateur est un accumulateur lithium-ion, empilement dans lequel les cellules électrochimiques sont séparées les unes des autres par un substrat collecteur de courant, dit substrat collecteur de courant bipolaire 11, qui se présente sous forme d'une feuille dont une face est au contact de l'électrode négative d'une cellule électrochimique tandis que l'autre face est au contact de l'électrode positive de la cellule électrochimique adjacente.
L'architecture bipolaire correspond ainsi à une mise en série de plusieurs accumulateurs par l'intermédiaire de substrats collecteurs de courant dits bipolaires, ce qui permet de s'affranchir des connectiques externes, qui sont nécessaires pour assembler en série des accumulateurs monopolaires. Elle conduit donc à des systèmes plus légers que ceux résultant d'un assemblage en série d'accumulateurs monopolaires, augmentant ainsi la densité d'énergie. De plus, selon le nombre de cellules constitutives de l'empilement, la tension finale de l'accumulateur peut être facilement ajustable

et peut être très élevée, si souhaité.

Néanmoins, la mise à disposition de ce type d'architecture nécessite la préparation d'électrode(s) biface(s) à partir de deux formulations distinctes et, en particulier, une formulation pour la réalisation de l'électrode négative sur une première face du substrat collecteur de courant de l'électrode biface (cette formulation comprenant, classiquement, un matériau actif d'électrode négative, comme du graphite ou du $Li_4Ti_5O_{12}$) et une formulation pour la réalisation de l'électrode positive sur une seconde face opposée à la première face du substrat collecteur de courant de l'électrode biface (cette formulation comprenant, classiquement, un matériau actif d'électrode positive, comme des oxydes lamellaires ou du $LiFePO_4$) et ainsi la mise en place de deux étapes de préparation des encres et de dépôt distinctes. Il en est de même des électrodes terminales de l'empilement qui nécessitent une préparation distincte, à savoir une préparation pour l'électrode positive terminale et une préparation pour l'électrode négative terminale.

JP 2016 076342 A et XP055557423 (Nobuhiro Ogihara et al (2014) "Organic Dicarboxylate Negative Electrode Materials with Remarkably Small Strain for High-voltage Bipolar Batteries", Angewandte Chemie International Edition, vol. 53, no. 43, pages 11467-11472) divulguent des batteries à architecture bipolaire où le collecteur biface comporte une couche de cathode comprenant un composé inorganique comme matériau actif positif et une couche d'anode comprenant un composé organique comme matériau actif négatif.

CN 103 035 942 A et XP055830532 (Tong Liuchuan et al (2019) "Symmetric All-Quinone Aqueous Battery", ACS Applied Energy Materials, vol. 2, no. 6, pages 4016-4021) divulguent des batteries symétriques qui utilisent un unique matériau actif, lequel est organique. L'architecture desdites batteries est monopolaire.

Pour s'affranchir de ces inconvénients, les inventeurs se sont donc fixé pour objectif de proposer de nouveaux accumulateurs à architecture bipolaire d'assemblage simple ne nécessitant pas l'utilisation de formulations multiples pour la réalisation des électrodes et qui, par ailleurs, présentent les avantages suivants :

- un coût de fabrication moindre ; et
- un équilibrage de cellule plus aisé.

## EXPOSÉ DE L'INVENTION

Les auteurs de la présente invention ont pu accéder aux objectifs susmentionnés en mettant en place dans des accumulateurs à architecture bipolaire un matériau actif commun à toutes les électrodes constitutives des accumulateurs.

Aussi, les accumulateurs à architecture bipolaire de l'invention peuvent être ainsi définis comme étant des accumulateurs à architecture bipolaire qui comprennent deux collecteurs de courant terminaux entre lesquels est disposé un empilement de n cellules électrochimiques, n étant un entier au moins égal à 2, dans lequel :

- chaque cellule électrochimique comprend une électrode positive, une électrode négative et un constituant électrolytique disposé entre l'électrode positive et l'électrode négative ;
- les n cellules électrochimiques sont séparées les unes des autres par *n*-1 collecteurs de courant bipolaires ;

et qui sont caractérisés en ce que l'électrode positive et l'électrode négative de chaque cellule électrochimique comprennent, comme matériau actif, un matériau actif commun, qui est un composé redox organique comprenant, respectivement, au moins un groupe apte à capter des électrons et au moins un groupe à céder des électrons.

Avant d'entrer plus en détail dans la description, nous précisions les définitions suivantes.

Par électrode positive, on entend, classiquement, dans ce qui précède et ce qui suit, l'électrode qui fait office de cathode, quand l'accumulateur débite du courant (c'est-à-dire lorsqu'il est en processus de décharge) et qui fait office d'anode lorsque l'accumulateur est en processus de charge.

Par électrode négative, on entend, classiquement, dans ce qui précède et ce qui suit, l'électrode qui fait office d'anode, quand l'accumulateur débite du courant (c'est-à-dire lorsqu'il est en processus de décharge) et qui fait office de cathode, lorsque l'accumulateur est en processus de charge.

Par composé organique, on entend, classiquement, un composé de la chimie du carbone, comportant des atomes de carbone et d'hydrogène et un ou plusieurs hétéroatomes choisis parmi l'oxygène, l'azote, le soufre, le phosphore, ces atomes et ces hétéroatomes étant uniquement liés par des liaisons de covalence, ce composé pouvant être sous forme de sels.

Dans le cadre de l'invention, l'utilisation tant au niveau de chaque électrode positive que de chaque électrode négative du même composé redox, qui est capable d'assurer, de par la présence d'au moins un groupe apte à capter des électrons et d'au moins un groupe apte à céder des électrons, le rôle de matériau actif oxydant et de matériau actif réducteur, permet d'accéder aux avantages suivants :

- une diminution des coûts liée à cette simplification et également au fait qu'un seul composé redox est à se procurer ou à produire ; et

- une facilité de fabrication du fait de la possibilité d'utiliser une seule formulation à base des mêmes ingrédients pour fabriquer les électrodes ;
- un équilibrage plus aisé des cellules, dans le cas où les deux groupes redox portés par le composé redox organique échangent le même nombre d'électrons, du fait de pouvoir disposer de capacités d'électrodes identiques grâce à un grammage identique ou, dans le cas contraire, du fait de pouvoir ajuster les capacités des deux faces en modifiant uniquement l'épaisseur de dépôt et à l'utilisation d'une seule et même formulation pour constituer ces électrodes.

Le composé redox utilisé dans les cellules de l'invention du fait de la présence de deux types de groupes tels que définis ci-dessus peut être qualifié de composé biredox, car le groupe apte à capter des électrons (pouvant être qualifié également de groupe se réduisant réversiblement à bas potentiel) appartient à un premier couple redox et le deuxième groupe apte à céder des électrons (pouvant être qualifié également de groupe s'oxydant réversiblement à haut potentiel) appartient à un deuxième couple redox.

Des composés redox appropriés peuvent être des composés, dans lesquels le ou les groupes aptes à capter des électrons peuvent être :

- des groupes carbonyles conjugués, tels que des quinones ;
- des groupes carboxylates, tels que des groupes carboxylates lithiés ;
- des groupes disulfures ;
- des groupes azoïques ;
- des groupes imides (par exemple, des groupes polyimides) ; ou
- des groupes hétéroaromatiques, tels que des groupes polyviologènes ; et/ou dans lesquels le ou les groupes aptes à céder des électrons peuvent être :
    - des groupes énoliques ou énolates ;
    - des groupes nitroxydes ;
    - des groupes thioéthers ; ou
    - des groupes amines aromatiques, tels des dérivés de la dianiline.

Des composés spécifiques répondant à ces critères sont des composés comprenant, à la fois, au moins un groupe choisi parmi les groupes carbonyles conjugués ; les groupes carboxylates, les groupes disulfures et au moins un groupe choisi parmi les groupes énoliques ou énolates, les groupes nitroxydes et les groupes thioéthers.

On précise que par groupes carbonyles conjugués, on entend deux groupes carbonyles conjugués *via* une ou plusieurs doubles liaisons, ces groupes carbonyles conjugués pouvant être schématisés par la formule simplifiée (I) suivante :

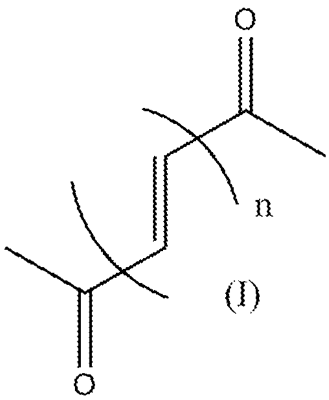
(I)

n étant un entier égal au moins à 1.

On précise que, par groupe énolique ou énolate, on entend un groupe répondant respectivement aux formules simplifiées (II) et (III) suivantes :

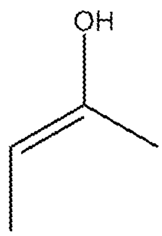 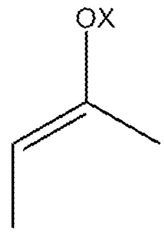

(II) (III)

dans laquelle X représente un cation monovalent tel que du lithium.

Des composés redox répondant aux spécificités mentionnées ci-dessus peuvent être des composés quinones, qui désignent des composés hydrocarbonés comprenant un ou plusieurs cycles benzéniques, sur le ou lesquels deux atomes d'hydrogène sont remplacés par deux atomes d'oxygène formant ainsi chacun une double liaison avec un atome de carbone, de tels composés comprenant ainsi deux groupes carbonyles conjugués aptes à capter des électrons, lesquels composés quinones doivent être également substitués par au moins un substituant comprenant au moins un groupe apte à céder des électrons, tel qu'un groupe énolate, un groupe nitroxyde, un groupe thioéther.

Les composés redox de la famille des composés quinones présentent notamment l'avantage d'être à faible impact environnemental, d'être souvent bon marché et peuvent être d'origine biologique (certains composés quinones se retrouvant dans des plantes, des champignons, des bactéries voire dans certains animaux).

Plus spécifiquement, les composés quinones peuvent être choisis parmi les composés benzoquinones (tels que des composés 1,4-benzoquinones, des composés 1,2-benzoquinones), les composés naphtoquinones (tels que des composés 1,4-naphtoquinones, des composés 1,2-naphtoquinones, des composés 1,5-naphtoquinones, des composés 1,7-naphtoquinones, des composés 2,3-naphtoquinones, des composés 2,6-naphthoquinones) et les composés anthraquinones (tels que des composés 9,10-anthraquinones, des composés 1,2-anthraquinones, des composés 1,4-anthraquinones, des composés 1,10-anthraquinones, des composés 2,9-anthraquinones, des composés 1,5-anthraquinones, des composés 1,7-anthraquinones, des composés 2,3-anthraquinones, des composés 2,6-anthraquinones), ces composés comprenant au moins un substituant comprenant au moins un groupe apte à céder des électrons, tel qu'un groupe énolate, un groupe nitroxyde, un groupe thioéther et, éventuellement, au moins un autre substituant choisi parmi $-N(CH_3)_2$, $-NH_2$, -OR, -OH, -SH, $-CH_3$, $-SiR_3$, -F, -Cl, $-C_2H_3$, -CHO, $-COOCH_3$, $-CF_3$, -CN, -COOH, $-PO_3H_2$, $-SO_3H$, $NO_2$, -COOM, -COOR, $-SO_3M$, -COR, $-C{=}NCHR'R''$, avec R, R' et R'' représentant, indépendamment l'un de l'autre, H ou un groupe alkyle et M représentant Li, Na, K ou Mg.

De manière encore plus spécifique, il peut s'agir d'un composé anthraquinone, tel qu'un composé 9,10-anthraquinone, comprenant au moins un substituant comprenant au moins un groupe apte à céder des électrons, un composé redox particulier répondant aux caractéristiques mentionnées ci-dessus, répondant à la formule (IV) suivante :

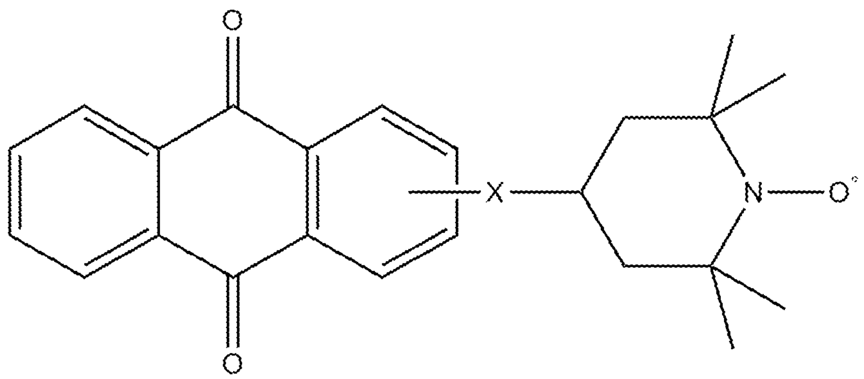

(IV)

dans laquelle X est un groupe espaceur organique ou une liaison simple, c'est-à-dire que le groupe tétraméthylpipéridinyloxy est directement lié à l'un des atomes de carbone du cycle.

Pour précision, la liaison -X- entrecoupant le cycle indique que le groupe tétraméthylpipéridinyloxy peut être lié à l'un quelconque des atomes de carbone du cycle anthraquinone soit directement soit *via* le groupe espaceur organique.

Plus spécifiquement, ce composé redox peut répondre à la formule (V) suivante :

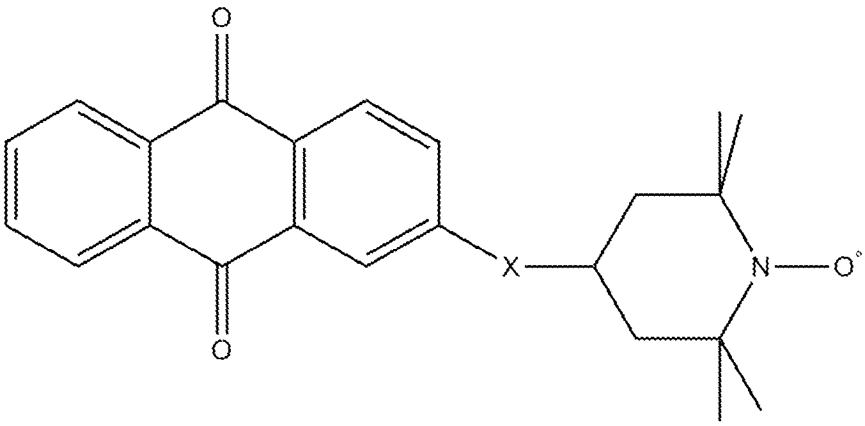

(V)

avec X étant tel que défini ci-dessus.

Lorsque X représente un groupe espaceur organique, il peut être un groupe imidazolium, dont le contre-ion peut être, par exemple, un anion halogène, un anion TFSI (TFSI étant l'abréviation correspondant au bis(trifluorométhane) sulfonimide), un anion TfO (TfO étant l'abréviation correspondant au trifluorométhanesulfonate).

Lors du fonctionnement de l'accumulateur (c'est-à-dire lorsque celle-ci est en processus de décharge), le composé redox spécifique mentionné ci-dessus subit une réaction de réduction à chaque électrode positive, cette réaction pouvant être représentée par l'équation chimique (VI) suivante :

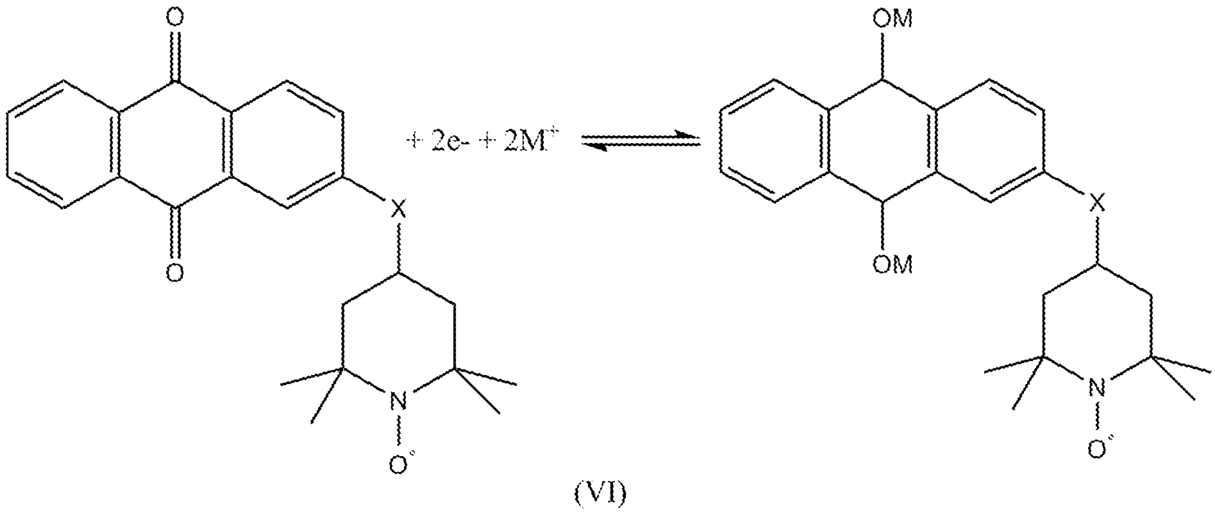


(VI)

$M^+$ représentant un cation ;

tandis que le même composé redox subit une réaction d'oxydation à chaque électrode négative, cette réaction pouvant être représentée par l'équation chimique (VII) suivante :

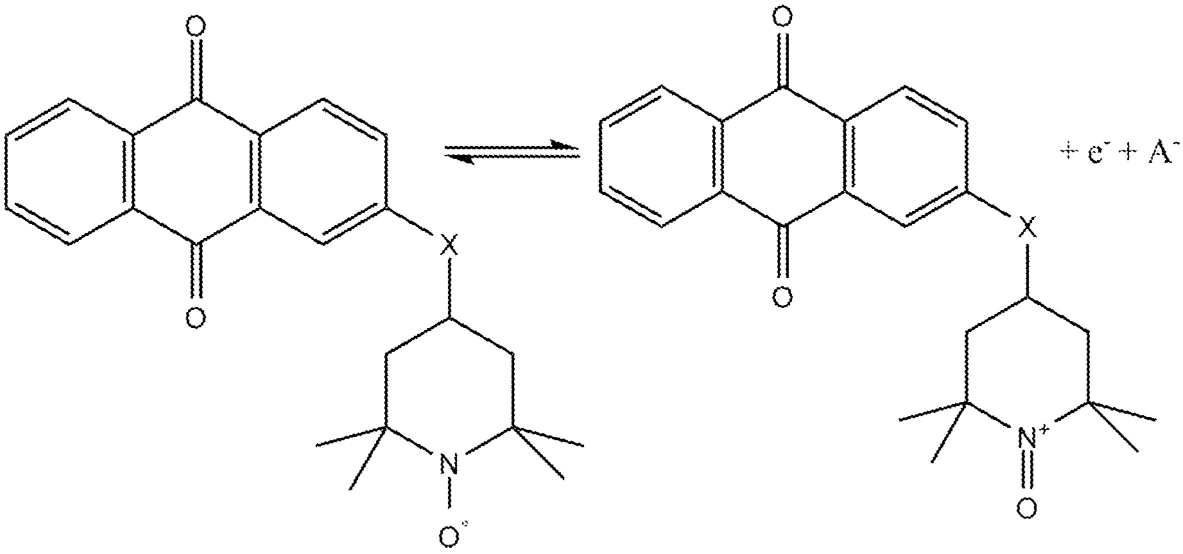

(VII)

D'autres composés redox répondant aux spécificités mentionnées ci-dessus peuvent être des composés quinones sous leur forme énolate, c'est-à-dire dont les groupes carbonyles conjugués =C-CO- sont transformés en groupes -C=COX- (avec X étant un cation monovalent, tel que du lithium), lesquels composés quinones sont également substitués par au moins un groupe apte à capter des électrons, tel qu'un groupe carboxylate, et éventuellement par un autre substituant choisi parmi $-N(CH_3)_2$, $-NH_2$, -OR, -OH, -SH, $-CH_3$, $-SiR_3$, -F, -Cl, $-C_2H_3$, -CHO, $-COOCH_3$, $-CF_3$, -CN, -COOH, $-PO_3H_2$, $-SO_3H$, $NO_2$, -COOM, -COOR, $-SO_3M$, -COR, -C=NCHR'R", avec R, R' et R" représentant, indépendamment l'un de l'autre, H ou un groupe alkyle et M représentant Li, Na, K ou Mg.

Plus spécifiquement, il peut s'agir d'un composé benzoquinone sous forme énolate substitué par au moins un groupe carboxylate, et encore plus spécifiquement un composé 1,4-benzoquinone substitué par au moins un groupe carboxylate (par exemple, deux groupes carboxylates) et éventuellement un autre substituant tel que ceux définis ci-dessus, un exemple de ce type répondant à la formule (VIII) suivante :

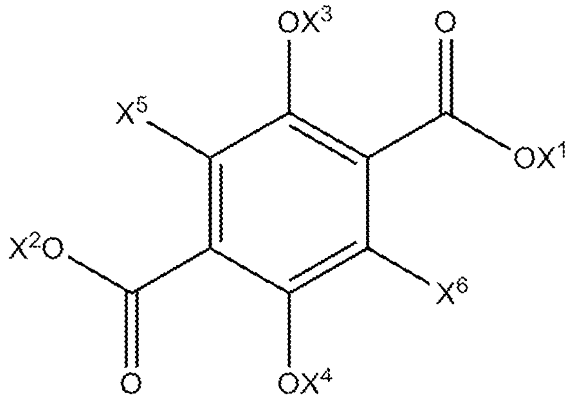

(VIII)

dans laquelle $X^1$ à $X^4$ représentent, indépendamment l'un de l'autre, un cation et $X^5$ et $X^6$ représentent, indépendamment, l'un de l'autre, un atome d'hydrogène ou un groupe $-SO_3H$, un composé particulier répondant à cette spécificité étant celui de formule (IX) suivante :

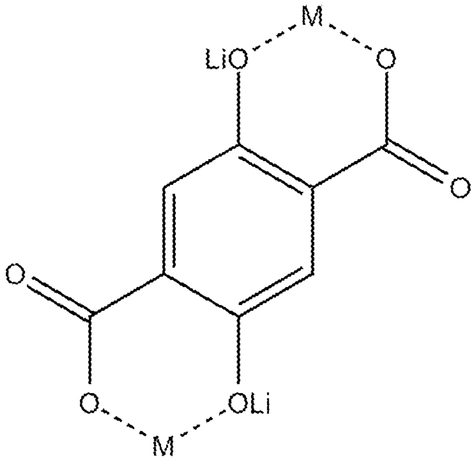

(IX)

avec M représentant un cation bivalent, tel qu'un cation magnésium, M établissant un pont entre l'atome d'oxygène du groupe carboxylate et l'atome d'oxygène du groupe énolate.

Lors du fonctionnement de l'accumulateur (c'est-à-dire lorsque celle-ci est en processus de décharge), le composé redox de formule (VIII) susmentionnée subit une réaction de réduction des groupes carboxylates à chaque électrode positive, cette réaction pouvant être représentée par l'équation chimique (X) suivante :

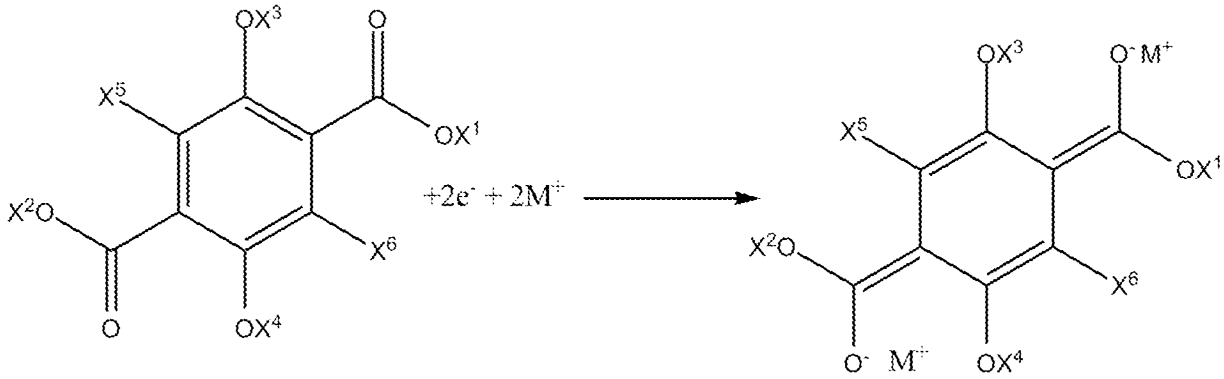


(X)

tandis que le même composé redox subit une réaction d'oxydation des groupes énolates à chaque électrode négative, cette réaction pouvant être représentée par l'équation chimique (XI) suivante :

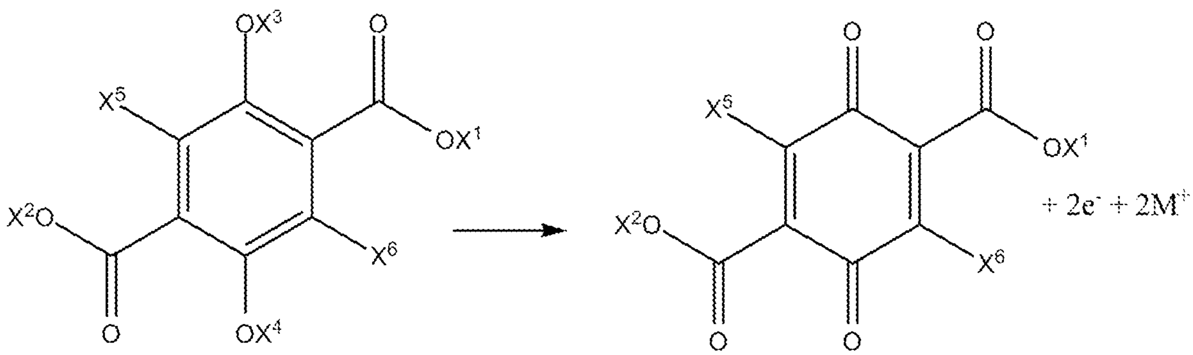


(XI)

Outre un matériau actif tel que défini plus haut, les électrodes négatives et les électrodes positives de l'accumulateur peuvent comprendre, des additifs conducteurs électroniques, c'est-à-dire des additifs susceptibles de conférer à l'électrode, dans laquelle ils sont incorporés, une conductivité électronique, ces additifs pouvant être, par exemple, des matériaux carbonés tels que le noir de carbone, les nanotubes de carbone, les fibres de carbone (en particulier, les fibres de carbone obtenues en phase vapeur connues sous l'abréviation VGCF), du graphite sous forme de poudre, les fibres de graphite et les mélanges de ceux-ci. Les électrodes négatives et les électrodes positives peuvent comprendre, en outre, un ou plusieurs liants organiques, le ou les liants organiques pouvant être, en particulier, des liants polymériques, tels que :

*les (co)polymères fluorés, tels qu'un polytétrafluoroéthylène (connu sous l'abréviation PTFE), un polyfluorure de vinylidène (connu sous l'abréviation PVDF), un poly(fluorure de vinylidène-co-hexafluoropropène) (connu sous l'abréviation PVDF-HFP) ;
*les polymères élastomères, tels qu'un copolymère styrène-butadiène (connu sous l'abréviation SBR), un copolymère éthylène-propylène-monomère diénique (connu sous l'abréviation EPDM) ;
*les polymères de la famille des alcools polyvinyliques ;
*les polymères cellulosiques, tel qu'une carboxyméthylcellulose (connue sous l'abréviation CMC) ;
*les polymères de la famille des poly(méth)acrylates, tels qu'un polyméthacrylate de méthyle (connu sous l'abréviation PMMA) ;
*les polymères de la famille des polyacides acryliques (connus sous l'abréviation PAA) ; et
*les mélanges de ceux-ci.

Dans ce contexte, les électrodes se présentent ainsi, du point de leur constitution, sous forme d'un matériau composite comprenant une matrice polymérique constituée d'un ou plusieurs liants polymériques, tels que ceux mentionnés ci-dessus et, comprenant, comme charges, au moins un matériau actif tel que défini et, éventuellement, un ou plusieurs additifs conducteurs électroniques, tels que ceux définis ci-dessus.

En variante, les électrodes peuvent être, avantageusement, en particulier dans des systèmes à électrolyte polymère gélifié, des électrodes gélifiées, ce qui signifie que, outre la présence d'un matériau actif tel que défini ci-dessus, elles comprennent (voire sont constituées de) un matériau composite comprenant (voire étant constitué de) une matrice polymérique formée classiquement d'au moins un polymère apte à gélifier (pouvant être appelés polymère(s) gélifiant(s) (FF)) au contact d'un électrolyte liquide, le matériau actif d'électrode et éventuellement un ou plusieurs additifs conducteurs électroniques, telle que ceux mentionnés ci-dessus, l'électrolyte liquide étant confiné au sein de la matrice polymérique, lequel électrolyte étant, de préférence, de même nature que celui du constituant électrolytique disposé entre l'électrode positive et l'électrode négative de chaque cellule, lequel constituant électrolytique étant, avantageusement, un électrolyte liquide confiné au sein d'une membrane polymère gélifiée.

Dans ce cas, le ou les polymères gélifiants (FF) sont choisi(s), avantageusement, parmi des polymères fluorés comprenant au moins une unité répétitive issue de la polymérisation d'un monomère fluoré et, de préférence, au moins une unité répétitive issue de la polymérisation d'un monomère comprenant au moins un groupe acide carboxylique, éventuellement sous forme d'un sel.

Pour les polymères gélifiants (FF), la ou les unités répétitives issues de la polymérisation d'un monomère fluoré peuvent être, plus spécifiquement, une ou des unités répétitives issues de la polymérisation d'un ou plusieurs monomères éthyléniques comprenant au moins un atome de fluor et éventuellement un ou plusieurs autres atomes d'halogène, des exemples de monomères de ce type étant les suivants :

- des perfluorooléfines en $C_2$-$C_8$, telles que le tétrafluoroéthylène, l'hexafluoropropène (connu également sous l'abréviation HFP) ;
- des fluorooléfines hydrogénées en $C_2$-$C_8$, telles que le fluorure de vinylidène, le fluorure de vinyle, le 1,2-difluoroéthylène et le trifluoroéthylène ;
- des perfluoroalkyléthylènes de formule $CH_2=CHR^1$, dans laquelle $R^1$ est un groupe perfluoroalkyle en $C_1$-$C_6$;
- des fluorooléfines en $C_2$-$C_6$ comportant un ou plusieurs autres atomes d'halogène (tels que du chlore, du brome, de l'iode), telles que du chlorotrifluoroéthylène ;
- des (per)fluoroalkylvinyléthers de formule $CF_2=CFOR^2$, dans laquelle $R^2$ est un groupe fluoro- ou perfluoroalkyle en $C_1$-$C_6$, tel que $CF_3$, $C_2F_5$, $C_3F_7$;
- des monomères de formule $CF_2=CFOR^3$, dans laquelle $R^3$ est un groupe alkyle en $C_1$-$C_{12}$, un groupe alcoxy en $C_1$-$C_{12}$ ou un groupe (per)fluoroalcoxy en $C_1$-$C_{12}$, tel qu'un groupe perfluoro-2-propoxypropyle ; et/ou
- des monomères de formule $CF_2=CFOCF_2OR^4$, dans laquelle $R^4$ est un groupe fluoro- ou perfluoroalkyle en $C_1$-$C_6$, tel que $CF_2$, $C_2F_5$, $C_3F_7$ ou un groupe fluoro- ou perfluoroalcoxy en $C_{1-}C_6$, tel que $-C_2F_5-O-CF_3$.

Plus particulièrement, le ou les polymères gélifiants (FF) peuvent comprendre, comme unité(s) répétitive(s)

issue(s) de la polymérisation d'un monomère fluoré, une unité répétitive issue de la polymérisation d'un monomère de la catégorie des perfluorooléfines en $C_2$-$C_8$, telles que l'hexafluoropropène et une unité répétitive issue de la polymérisation d'un monomère de la catégorie des fluorooléfines hydrogénées en $C_2$-$C_8$, telles que le fluorure de vinylidène.

Le ou les unités répétitives issues de la polymérisation d'un monomère comprenant au moins un groupe acide carboxylique, éventuellement sous forme d'un sel peuvent être, plus spécifiquement, une ou des unités répétitives issues de la polymérisation d'un monomère de formule (XII) suivante :

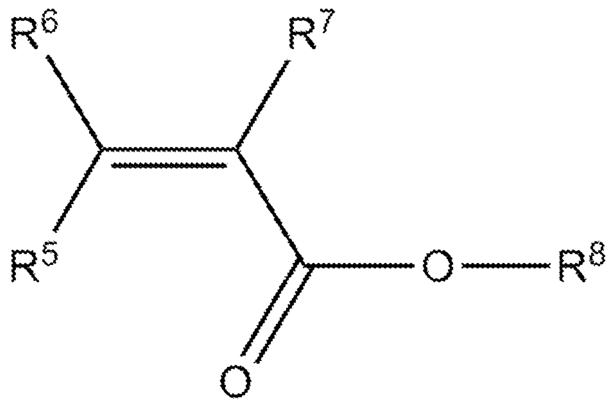

(XII)

dans laquelle $R^5$ à $R^7$ représentent, indépendamment l'un de l'autre, un atome d'hydrogène ou un groupe alkyle en $C_1$-$C_3$ et $R^8$ représente un atome d'hydrogène ou un cation monovalent (par exemple, un cation alcalin, un cation ammonium), des exemples particuliers de monomères de ce type étant l'acide acrylique ou l'acide méthacrylique.

Des polymères gélifiants (FF) particuliers utilisables dans le cadre de l'invention peuvent être des polymères comprenant une unité répétitive issue de la polymérisation du fluorure de vinylidène, une unité répétitive issue de la polymérisation d'un monomère comprenant au moins un groupe acide carboxylique, tel que l'acide acrylique et éventuellement une unité répétitive issue de la polymérisation d'un monomère fluoré différent du fluorure de vinylidène (et plus spécifiquement, une unité répétitive issue de la polymérisation de l'hexafluoropropène).

Plus particulièrement encore, des polymères gélifiants (FF) utilisables dans le cadre de l'invention sont des polymères gélifiants, dont les unités répétitives susmentionnées sont issues de la polymérisation :

- d'au moins 70% en moles d'une fluorooléfine hydrogénée en $C_2$-$C_8$, de préférence, le fluorure de vinylidène ;
- de 0,1 à 15% en moles d'une perfluorooléfine en $C_2$-$C_8$, de préférence, l'hexafluoropropène ; et
- de 0,01 à 20% en moles d'un monomère de formule (I) susmentionnée, de préférence, l'acide acrylique.

Par ailleurs, le ou les polymères gélifiants (FF) présentent, avantageusement, une viscosité intrinsèque mesurée à 25°C dans le N,N-diméthylformamide allant de 0,1 à 1,0 L/g, de préférence, de 0,25 à 0,45 L/g.

Plus spécifiquement, la viscosité intrinsèque est déterminée par l'équation ci-dessous basée sur la durée de chute, à 25°C, d'une solution obtenue par dissolution du polymère concerné dans un solvant (le N,N-diméthylformamide) à une concentration d'environ 0,2 g/dL en utilisant un viscosimètre Ubbelhode :
dans laquelle :

$$[\eta] = \frac{\eta_{sp} + \Gamma \cdot \ln \eta_r}{(1+\Gamma) \cdot c}$$

- $\eta$ correspond à la viscosité intrinsèque (en dL/g) ;
- c correspond à la concentration en polymère (en g/dL) ;
- $\eta_r$ correspond à la viscosité relative, c'est-à-dire le rapport entre la durée de chute de la solution et la durée de chute du solvant ;
- $\eta_{sp}$ correspond à la viscosité spécifique, c'est-à-dire $\eta_r$ - 1 ;
- $\Gamma$ correspond à un facteur expérimental fixé à 3 pour le polymère concerné.

Avantageusement, toutes les électrodes négatives de l'accumulateur répondent aux mêmes spécificités (à savoir, en termes de composition et de dimensions) de même que toutes les électrodes positives de l'accumulateur répondent également aux mêmes spécificités en termes de composition et de dimensions.

Pour les électrodes gélifiées, elles peuvent comprendre un électrolyte liquide piégé au sein de la matrice polymérique.

Dans ce cas, l'électrolyte liquide piégé au sein des électrodes gélifiées est, classiquement, un électrolyte conducteur d'ions, qui peut comprendre (voire est constitué de) au moins un solvant organique, au moins un sel métallique et éventuellement un composé de la famille des composés vinyliques.

Le ou les solvants organiques peuvent être des solvants carbonates et, plus spécifiquement :

- des solvants carbonates cycliques, tel que le carbonate d'éthylène (symbolisé par l'abréviation EC), le carbone de propylène (symbolisé par l'abréviation PC), le carbonate de butylène, le carbonate de vinylène, le carbonate de fluoroéthylène, le carbonate de fluoropropylène et les mélanges de ceux-ci ;
- des solvants carbonates linéaires, tels que le carbonate de diéthyle (symbolisé par l'abréviation DEC), le carbonate de diméthyle (symbolisé par l'abréviation DMC), le carbonate d'éthylméthyle (symbolisé par l'abréviation EMC) et les mélanges de ceux-ci.

Le ou les solvants organiques peuvent être également des solvants esters (tels que le propionate d'éthyle, le propionate de n-propyle), des solvants nitriles (tels que l'acétonitrile) ou des solvants éthers (tels que le diméthyléther, le 1,2-diméthoxyéthane).

Le ou les solvants organiques peuvent être également des liquides ioniques, c'est-à-dire, classiquement, des composés formés par la combinaison d'un cation chargé positivement et d'un anion chargé négativement, qui est à l'état liquide à des températures inférieures à 100°C sous pression atmosphérique.

Plus spécifiquement, les liquides ioniques peuvent comprendre :

- un cation choisi parmi les cations imidazolium, pyridinium, pyrrolidinium, pipéridinium, lesdits cations étant éventuellement substitués par au moins un groupe alkyle comprenant de 1 à 30 atomes de carbone ;
- un anion choisi parmi les anions halogénures, les anions perfluorés, les borates.

Encore plus spécifiquement, le cation peut être choisi parmi les cations suivants :

- un cation pyrrolidinium de formule (XIII) suivante :

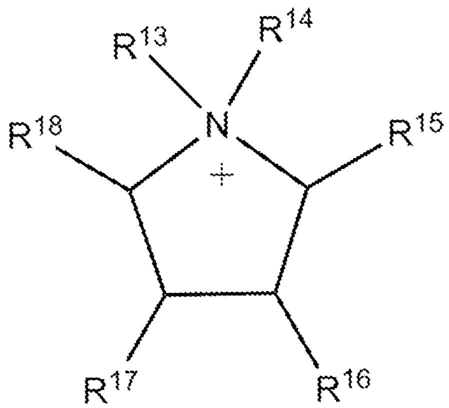

(XIII)

dans laquelle $R^{13}$ et $R^{14}$ représentent, indépendamment l'un de l'autre, un groupe alkyle en $C_1$-$C_8$ et $R^{15}$, $R^{16}$, $R^{17}$ et $R^{18}$ représentent, indépendamment l'un de l'autre, un atome d'hydrogène ou un groupe alkyle en $C_1$-$C_{30}$, de préférence, un groupe alkyle en $C_1$-$C_{18}$, de préférence encore, un groupe alkyle en $C_1$-$C_8$;

- un cation pipéridinium de formule (XIV) suivante :

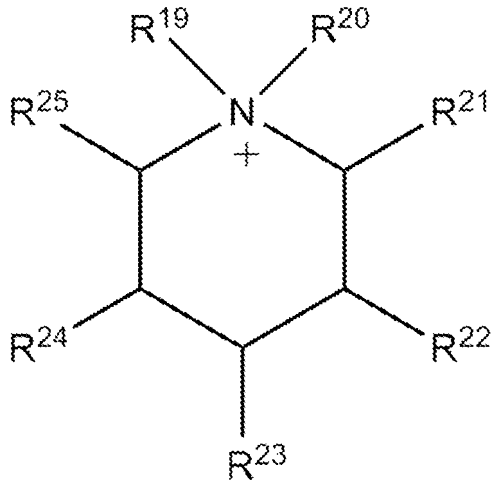

(XIV)

dans laquelle $R^{19}$ et $R^{20}$ représentent, indépendamment l'un de l'autre, un groupe alkyle en $C_1$-$C_8$ et $R^{21}$, $R^{22}$, $R^{23}$, $R^{24}$ et $R^{25}$ représentent, indépendamment l'un de l'autre, un atome d'hydrogène ou un groupe alkyle en $C_1$-$C_{30}$, de préférence, un groupe alkyle en $C_1$-$C_{18}$, de préférence encore, un groupe alkyle en $C_1$-$C_8$;

- un cation ammonium quaternaire ;
- un cation phosphonium quaternaire ;
- un cation imidazolium ; ou
- un cation pyrazolium.

En particulier, le cation chargé positivement peut être choisi parmi les cations suivants :

- un cation pyrrolidinium de formule (XIII-A) suivante :

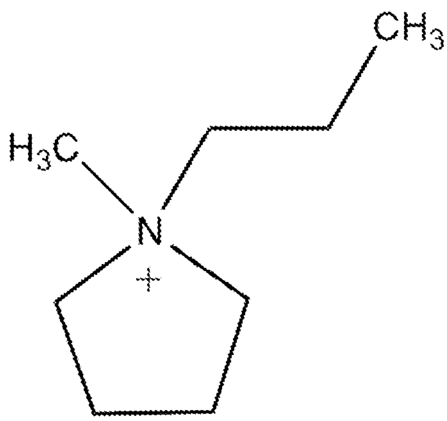

(XIII-A)

- un cation pipéridinium de formule (XIV-A) suivante :

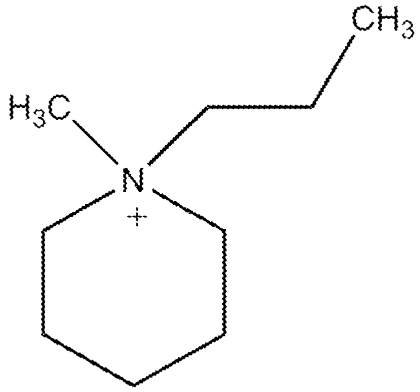

(XIV-A)

De manière spécifique, l'anion chargé négativement peut être choisi parmi :

- le 4,5-dicyano-2-(trifluorométhyl)imidazole (connu sous l'abréviation TDI) ;
- le bis(fluorosulfonyl)imidure (connu sous l'abréviation FSI) ;
- le bis(trifluorométhylsulfonyl)imidure de formule $(SO_7CF_3)_2N^-$;
- l'hexafluorophosphate de formule $PF_6^-$;
- le tétrafluoroborate de formule $BF_4^-$;
- l'oxaloborate de formule (XV) suivante :

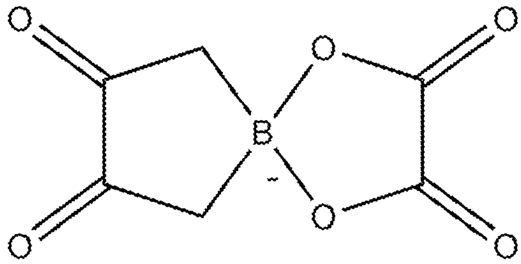

(XV)

Un liquide ionique spécifique et utilisable selon l'invention peut être un liquide ionique composé d'un cation de formule (XIII-A) telle que définie ci-dessus et un anion de formule $(SO_2CF_3)_2N^-$, $PF_6^-$ ou $BF_4^-$.

Le ou les sels métalliques peuvent être choisis parmi les sels de formules suivantes : MeI, $Me(PF_6)_n$, $Me(BF_4)n$, $Me(ClO_4)_n$, Me(bis(oxalato)borate)$_n$ (pouvant être désigné par l'abréviation Me(BOB)$_n$), $MeCF_3SO_3$, $Me[N(FSO_2)_2]_n$, $Me[N(CF_3SO_2)_2]_n$, $Me[N(C_2F_5SO_2)_2]_n$, $Me[N(CF_3SO_2)(R_FSO_2)]_n$, dans laquelle $R_F$ est un groupe $-C_2F_5$, $-C_4F_9$ ou $-CF_3OCF_2CF_3$, $Me(AsF_6)_n$, $Me[C(CF_3SO_2)_3]_n$, $Me_2S_n$, $Me(C_6F_3N_4)$ ($C_6F_3N_4$ correspondant à du 4,5-dicyano-2-(trifluorométhyl)imidazole et, lorsque Me est Li, le sel correspond à du 4,5-dicyano-2-(trifluorométhyl)imidazole de lithium, ce sel étant connus sous l'abréviation LiTDI), dans lesquelles Me est un élément métallique et, de préférence, un élément de transition métallique, un élément alcalin ou un élément alcalino-terreux et, de préférence encore, Me est Li (notamment, lorsque l'accumulateur de l'invention est un accumulateur lithium-ion ou lithium-air), Na (notamment, lorsque l'accumulateur est un accumulateur sodium-ion), K (notamment, lorsque l'accumulateur est un accumulateur potassium-ion), Cs, Mg (notamment, lorsque l'accumulateur est un accumulateur Mg-ion), Ca (notamment, lorsque l'accumulateur est un accumulateur calcium-ion) et Al (notamment, lorsque l'accumulateur est un accumulateur aluminium-ion) et n correspond au degré de valence de l'élément métallique (typiquement, 1, 2 ou 3).

Lorsque Me est Li, le sel est, de préférence, $LiPF_6$.

La concentration du sel métallique dans l'électrolyte liquide est, avantageusement, d'au moins 0,01 M, de préférence d'au moins 0,025 M et, de préférence encore, d'au moins 0,05 M et, avantageusement, d'au plus 5 M, de préférence, d'au plus 2 M et, de préférence encore, d'au plus, 1M.

En outre, l'électrolyte liquide peut comprendre un additif appartenant à la catégorie des composés vinyliques, tel que du carbonate de vinylène, cet additif étant compris dans l'électrolyte à une teneur ne dépassant pas 5% massique de la masse totale de l'électrolyte.

Un électrolyte liquide pouvant être utilisé dans les accumulateurs de l'invention, notamment lorsqu'il s'agit d'un accumulateur lithium-ion, est un électrolyte comprenant un mélange de solvants carbonates (par exemple, un mélange de solvants carbonates cycliques, tel qu'un mélange de carbonate d'éthylène et de carbonate de propylène et présent, par exemple, en volume identique), un sel de lithium, par exemple, $LiPF_6$ (par exemple, 1M) et du carbonate de vinylène (par exemple, présent à hauteur de 2% massique par rapport à la masse totale de l'électrolyte liquide).

En outre, la ou les électrodes positives et/ou la ou les électrodes négatives peuvent présenter une épaisseur allant de 2 $\mu$m à 500 $\mu$m, de préférence, de 10 $\mu$m à 400 $\mu$m et, de préférence encore, une épaisseur allant de 50 $\mu$m à 300 $\mu$m.

Grâce à la nature gélifiée des électrodes, il est possible d'accéder à des épaisseurs plus importantes que des électrodes classiques non gélifiées, ce qui permet d'incorporer davantage de matériau actif et d'accéder ainsi à une énergie embarquée plus importante.

En outre, chaque cellule électrochimique comporte un constituant électrolytique disposé entre l'électrode positive et l'électrode négative.

Ce constituant électrolytique peut être de différentes natures.

Selon une première variante, le constituant électrolytique peut être un électrolyte liquide piégé dans un séparateur.

Ce séparateur imbibé d'électrolyte liquide permet, de manière classique, également une conduction ionique (à savoir, le passage d'ions de l'électrode négative vers l'électrode positive et vice versa, selon que l'on se situe en processus de charge ou de décharge). En outre, il permet, avantageusement, de confiner l'électrolyte liquide, lequel électrolyte liquide pouvant répondre aux mêmes caractéristiques spécifiques que celles exposées ci-dessus au sujet des électrodes gélifiées, notamment en termes d'ingrédients (solvants organiques, sels, concentrations...).

Plus spécifiquement, ce séparateur peut consister en une membrane en un matériau choisi parmi les fibres de verre (et plus, spécifiquement, un non-tissé de fibres de verre), un matériau polymérique, tel qu'un polytéréphtalate (comme un polytéréphtalate d'éthylène, connu sous l'abréviation PET), une polyoléfine (par exemple, un polyéthylène, un polypropylène), un polyalcool vinylique, un polyamide, un polytétrafluoroéthylène (connu sous l'abréviation PTFE), un polychlorure de vinyle (connu sous l'abréviation PVC), un polyfluorure de vinylidène (connu sous l'abréviation PVDF). Le séparateur peut présenter une épaisseur allant de 5 à 300 $\mu$m.

Selon une deuxième variante, le constituant électrolytique peut être un électrolyte solide, tel qu'un électrolyte choisi dans les catégories suivantes :

- un verre ou une céramique conducteurs d'ions lithium se présentant sous une forme purement solide, par exemple, une couche mince déposée par dépôt chimique en phase vapeur (CVD) telle qu'une couche en LIPON, ou une couche d'un matériau composite comprenant une matrice polymérique, par exemple, en polyfluorure de vinylidène, et une charge constituée d'un oxyde lithié, tel que $Li_7La_3Zr_2O_{12}$ ;
- un électrolyte polymère solide sec composé d'un polymère du type polyoxyde d'éthylène (POE) et d'un sel de lithium, par exemple, du trifluorosulfonylimidure de lithium (LiTFSI) ; ou
- un électrolyte solide hybride constitué d'une matrice polymère chargée en sel de lithium et en verre ou céramique conducteur du lithium.

Enfin, selon une troisième variante, le constituant électrolytique peut être un électrolyte polymère gélifié, dans lequel un électrolyte liquide est confiné au sein d'une membrane polymère gélifiée, cette membrane comprenant, avantageusement, une partie organique comprenant (ou constitué de) au moins un polymère fluoré (F) comprenant au moins une unité répétitive issue de la polymérisation d'un monomère fluoré et au moins une unité répétitive issue de la polymérisation d'un monomère comprenant au moins un groupe hydroxyle, éventuellement sous forme d'un sel, et comprenant une partie inorganique formée, en tout ou partie, d'un ou plusieurs oxydes d'au moins un élément M choisi parmi Si, Ti et Zr et les combinaisons de ceux-ci.

L'électrolyte liquide peut répondre aux mêmes caractéristiques spécifiques que celles exposées ci-dessus au sujet des électrodes gélifiées, notamment en termes d'ingrédients (solvants organiques, sels, concentrations...).

Pour le polymère fluoré (F), la ou les unités répétitives issues de la polymérisation d'un monomère fluoré peuvent être, plus spécifiquement, une ou des unités répétitives issues de la polymérisation d'un ou plusieurs monomères éthyléniques comprenant au moins un atome de fluor et éventuellement un ou plusieurs autres atomes d'halogène des exemples de monomères de ce type étant les suivants :

- des perfluorooléfines en $C_2$-$C_8$, telles que le tétrafluoroéthylène, l'hexafluoropropène (connu également sous l'abréviation HFP) ;
- des fluorooléfines hydrogénées en $C_2$-$C_8$, telles que le fluorure de vinylidène, le fluorure de vinyle, le 1,2-difluoroéthylène et le trifluoroéthylène ;
- des perfluoroalkyléthylènes de formule $CH_2=CHR^1$, dans laquelle $R^1$ est un groupe perfluoroalkyle en $C_1$-$C_6$;

- des fluorooléfines en $C_2$-$C_6$ comportant un ou plusieurs autres atomes d'halogène (tels que du chlore, du brome, de l'iode), telles que du chlorotrifluoroéthylène ;
- des (per)fluoroalkylvinyléthers de formule $CF_2$=$CFOR^2$, dans laquelle $R^2$ est un groupe fluoro- ou perfluoroalkyle en $C_1$-$C_6$, tel que $CF_3$, $C_2F_5$, $C_3F_7$ ;
- des monomères de formule $CF_2$=$CFOR^3$, dans laquelle $R^3$ est un groupe alkyle en $C_1$-$C_{12}$, un groupe alcoxy en $C_1$-$C_{12}$ ou un groupe (per)fluoroalcoxy en $C_1$-$C_{12}$, tel qu'un groupe perfluoro-2-propoxypropyle ; et/ou
- des monomères de formule $CF_2$=$CFOCF_2OR^4$, dans laquelle $R^4$ est un groupe fluoro- ou perfluoroalkyle en $C_1$-$C_6$, tel que $CF_2$, $C_2F_5$, $C_3F_7$ ou un groupe fluoro- ou perfluoroalcoxy en $C_1$-$C_6$, tel que -$C_2F_5$-O-$CF_3$.

Plus particulièrement, le polymère fluoré (F) peut comprendre, comme unités répétitives issus de la polymérisation d'un monomère fluoré, une unité répétitive issue de la polymérisation d'un monomère de la catégorie des perfluorooléfines en $C_2$-$C_8$, telles que l'hexafluoropropène et une unité répétitive issue de la polymérisation d'un monomère de la catégorie des fluorooléfines hydrogénées en $C_2$-$C_8$, telles que le fluorure de vinylidène.

Toujours pour le polymère fluoré (F), le ou les unités répétitives issues de la polymérisation d'un monomère comprenant au moins un groupe hydroxyle, éventuellement sous forme d'un sel peuvent être, plus spécifiquement, une ou des unités répétitives issues de la polymérisation d'un monomère de formule (XVI) suivante :

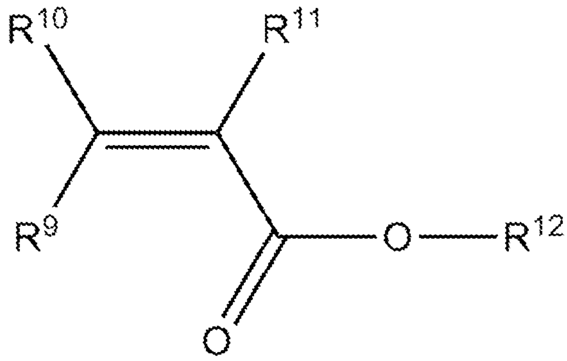

(XVI)

dans laquelle $R^9$ à $R^{11}$ représentent, indépendamment l'un de l'autre, un atome d'hydrogène ou un groupe alkyle en $C_1$-$C_3$ et $R^{12}$ est un groupe hydrocarboné en $C_1$-$C_5$ comprenant au moins un groupe hydroxyle, des exemples de monomères de ce type étant des monomères (méth)acrylates d'hydroxyéthyle, des monomères (méth)acrylates d'hydroxypropyle.

Plus particulièrement, le polymère fluoré (F) peut comprendre, comme unité répétitive issue de la polymérisation d'un monomère comprenant au moins un groupe hydroxyle, une unité répétitive issue de la polymérisation de l'un des monomères de formules (XVII) à (XIX) suivantes :

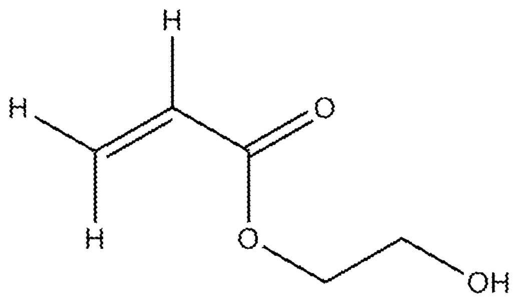

(XVII)

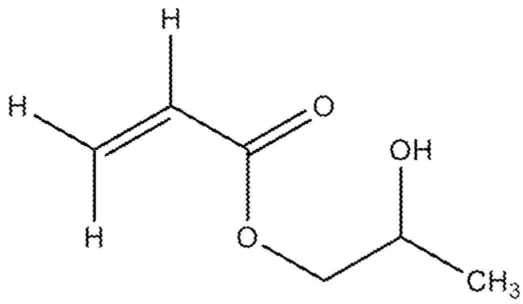

(XVIII)

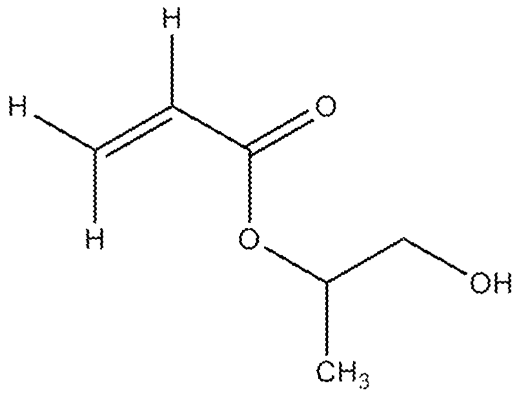

(XIX)

et, de préférence une unité répétitive issue de la polymérisation du monomère de formule (XVII) susmentionnée, ce monomère correspondant à l'acrylate de 2-hydroxyéthyle (connu également sous l'abréviation HEA).

Ainsi, des polymères fluorés (F) particuliers utilisables dans le cadre de l'invention pour former les membranes peuvent être des polymères comprenant, comme unités répétitives issues de la polymérisation d'un monomère fluoré, une unité répétitive issue de la polymérisation d'un monomère de la catégorie des perfluorooléfines en $C_2$-$C_8$, telles que l'hexafluoropropène et une unité répétitive issue de la polymérisation d'un monomère de la catégorie des fluorooléfines hydrogénées en $C_2$-$C_8$, telles que le fluorure de vinylidène, et comprenant, comme unité répétitive issue de la polymérisation d'un monomère comprenant au moins un groupe hydroxyle, une unité répétitive issue de la polymérisation d'un monomère de formule (XVI) précédemment définie et, plus spécifiquement encore, un polymère dont les unités répétitives susmentionnées sont issues de la polymérisation :

- d'au moins 70% en moles d'une fluorooléfine hydrogénée en $C_2$-$C_8$, de préférence, le fluorure de vinylidène ;
- de 0,1 à 15% en moles d'une perfluorooléfine en $C_2$-$C_8$, de préférence, l'hexafluoropropène ; et
- de 0,01 à 20% en moles d'un monomère de formule (IV), de préférence, l'acrylate de 2-hydroxyéthyle.

Avantageusement, la partie inorganique formée, au moins en partie, d'un ou plusieurs oxydes d'au moins un élément M choisi parmi Si, Ti et Zr et les combinaisons de ceux-ci est, en tout ou partie, liée chimiquement à la partie organique *via* les groupes hydroxyles.

Des électrolytes polymères gélifiés comprenant une matrice, dans laquelle la partie organique est liée chimiquement à la partie inorganique, comme décrit ci-dessus, se trouvent notamment décrits dans WO 2013/072216.

Les membranes de l'invention présentent, avantageusement, une surface qui recouvre entièrement la surface des électrodes négatives, avec lesquelles elles sont en contact (de sorte à assurer une séparation franche avec l'électrode positive) avec toutefois pour condition de ne pas dépasser de la face du collecteur de courant accueillant l'électrode négative, sauf à prendre le risque de créer un court-circuit ionique par mise en contact avec la membrane de la cellule adjacente lors du procédé d'assemblage des différents éléments constitutifs des accumulateurs.

Avantageusement, les accumulateurs de l'invention présentent, comme électrodes positives et négatives, des électrodes gélifiées telles que définies ci-dessus et, comme constituant électrolytique, un électrolyte liquide confiné dans une membrane polymère gélifiée que défini ci-dessus dans la troisième variante.

Grâce à l'utilisation d'électrodes gélifiées et de membranes gélifiées, il est obtenu les avantages suivants :

- l'électrolyte liquide étant confiné dans les électrodes gélifiées et la ou les membranes gélifiées qui séparent les électrodes, il n'y a pas de fuite d'électrolyte entre les compartiments de l'accumulateur bipolaire, ce qui permet d'éviter les courts-circuits ioniques et d'obtenir un comportement en cyclage stable pour tous les régimes, y compris en régime lent et ce pour un grand nombre de cycles ;
- du fait du confinement de l'électrolyte liquide dans les électrodes gélifiées et les membranes gélifiées, il n'est pas nécessaire de disposer des joints spécifiquement étanches en périphérie des électrodes ;
- lors de la fabrication de l'accumulateur bipolaire, il n'est pas nécessaire de procéder à une étape de remplissage en électrolyte pour chacune des cellules empilées ni avant fermeture de l'emballage, l'électrolyte liquide étant déjà contenu dans les électrodes gélifiées et les membranes gélifiées, ce qui conduit à un gain de temps dans le procédé de fabrication et à une manipulation aisée ;
- la possibilité pour ces électrodes gélifiées d'empêcher aussi, du fait de l'affinité de celles-ci pour les électrolytes liquides, la fuite d'électrolyte liquide des membranes gélifiées, qui sont en contact avec les électrodes gélifiées.

Les accumulateurs de l'invention sont des accumulateurs à architecture bipolaire, ce qui suppose, la présence de collecteur(s) de courant bipolaire(s) entre deux cellules adjacentes.

Plus spécifiquement, le collecteur de courant bipolaire (lorsque l'accumulateur ne comporte que deux cellules) ou les collecteurs de courant bipolaires (lorsque l'accumulateur comporte plus de deux cellules) peuvent être définis comme des collecteurs de courant qui séparent deux cellules électrochimiques adjacentes l'une de l'autre et qui supportent sur une première face une électrode de l'une de ces cellules électrochimiques et sur une deuxième face opposée à la première face une électrode de signe opposé de l'autre de ces cellules électrochimiques.

Par ailleurs, on considère qu'une cellule électrochimique est adjacente à une autre cellule électrochimique lorsqu'elle précède ou suit immédiatement celle-ci dans l'empilement et n'est donc séparée d'elle que par un collecteur de courant bipolaire.

Il est entendu que les cellules électrochimiques sont classiquement isolées ioniquement les unes des autres, notamment par la présence du collecteur de courant bipolaire.

Les accumulateurs de l'invention comprennent également des collecteurs de courant terminaux généralement positionnés aux extrémités de l'empilement et qui accueillent, sur une de leurs faces, une couche d'électrode appartenant à une cellule terminale (cette couche d'électrode étant une couche d'électrode positive ou une couche d'électrode négative selon la polarité souhaitée), cette couche d'électrode étant, classiquement, de constitution identique à celle d'une couche d'électrode de même polarité associée à un collecteur de courant bipolaire.

Le ou les collecteur(s) de courant, qu'ils soient d'ailleurs terminaux ou bipolaires, peuvent être monocouche, auquel cas ils sont préférentiellement constitués d'une feuille métallique alors de deux feuilles accolées. Ils présentent, par exemple, une épaisseur de 20 $\mu$m.

Avantageusement, le ou les collecteur(s) de courant, qu'ils soient terminaux ou bipolaires, peuvent être constitués d'une feuille conductrice de l'électricité, par exemple, à base de carbone ou d'au moins un métal (par exemple, une feuille monométallique ou bimétallique), tel qu'une feuille en aluminium ou en aluminium-cuivre.

Que ce soient pour les collecteurs de courant bipolaire ou les collecteurs terminaux, la ou les faces occupées par une électrode présentent, avantageusement, à leur périphérie, un bord libre (c'est-à-dire non occupé par l'électrode) et/ou au moins une languette en contact avec le ou les collecteurs ou prolongeant celui ou ceux-ci, tout ou partie de ces bords libres et/ou languettes étant recouverts, en tout ou partie, par une couche de matériau isolant. Plus spécifiquement, chaque couple de collecteurs de courant en vis-à-vis l'un de l'autre *via* un bord libre et/ou une languette peuvent comprendre pour au moins l'un d'autre eux une couche de matériau isolant recouvrant tout ou partie du bord libre et/ou de la languette.

En outre, les accumulateurs de l'invention peuvent comporter un emballage destiné, comme son nom l'indique, à emballer les différents éléments constitutifs de l'empilement.

Cet emballage peut être souple (auquel cas, il est, par exemple, réalisé à partir d'un film laminé comprenant une trame en forme de feuille d'aluminium qui est revêtue sur sa surface extérieure d'une couche en polytéréphtalate d'éthylène (PET) ou en un polyamide et qui est revêtue sur sa surface intérieure d'une couche en polypropylène (PP) ou polyéthylène (PE)) ou bien rigide (auquel cas, il est, par exemple, en un métal léger et peu coûteux tel que l'acier inoxydable, l'aluminium ou le titane, ou bien en une résine thermodurcie telle qu'une résine époxyde) selon le type d'application visé.

Le nombre n de cellules électrochimiques que peuvent comporter les accumulateurs de l'invention est choisi de sorte à obtenir une tension totale Utot satisfaisante en fonction des applications auxquelles est destinée cette batterie, selon la règle Utot = *n* x Un, avec Un qui correspond à la tension du couple électrochimique employé. Typiquement, n peut être compris entre 2 et 20 avec les accumulateurs de l'invention.

Les accumulateurs de l'invention peuvent trouver application dans la production de véhicules électriques ou hybrides, de dispositifs de stockage stationnaire de l'énergie et de dispositifs électroniques portables (téléphones, tablettes tactiles, ordinateurs, appareils photographiques, caméscopes, outils portatifs, capteurs etc).

Les accumulateurs de l'invention peuvent être préparés par un procédé comprenant une étape d'assemblage des éléments de base, que sont la ou les collecteurs de courant bipolaire revêtus sur deux faces opposées, respectivement, par une électrode positive et une électrode négative (le nombre de collecteurs de courant à assembler correspondant à (n-1) avec n correspondant au nombre de cellules de l'accumulateur), les membranes telles que définies ci-dessus et les collecteurs de courant terminaux revêtus sur une de leurs faces, pour l'un, d'une électrode négative et pour l'autre d'une électrode positive.

Chaque membrane peut être interposée entre l'électrode positive et l'électrode négative de chaque cellule, ce qui signifie, en d'autres termes, qu'elle préexiste à la formation de cet empilement ou elle peut être déposée (par toutes techniques de dépôts de solution, telles que l'enduction, le coulage ou l'impression) sur une face de l'une des électrodes positive ou négative de chaque cellule.

Les différents éléments de base peuvent être préparés préalablement avant assemblage, notamment en ce qui concerne les électrodes positives et négatives.

Ainsi, notamment, les électrodes positives et négatives peuvent être réalisées par dépôt d'une composition

comprenant les ingrédients constitutifs des électrodes (polymère gélifiant (FF), matériau actif, électrolyte liquide et éventuellement au moins un additif conducteur électronique tels que définis ci-dessus) sur les collecteurs de courant par une technique de dépôt de solution (par exemple, l'enduction, l'impression, le coulage) suivie d'un séchage.

Plus spécifiquement, les électrodes positives et négatives peuvent être préparées par un procédé comprenant les étapes suivantes :

(i) la fourniture d'un collecteur de courant ;
(ii) la fourniture d'une composition comprenant

- au moins un polymère gélifiant (FF) tel que défini ci-dessus ;
- au moins le matériau actif d'électrode, qui est un composé organique redox ;
- un électrolyte liquide ;
- éventuellement, un ou plusieurs additifs conducteurs électroniques ;

(iii) l'application de la composition de l'étape (ii) sur le collecteur de courant de l'étape (i), moyennant quoi il résulte un ensemble comprenant le collecteur de courant revêtu d'au moins une couche de ladite composition ; et
(iv) le séchage de l'ensemble issu de l'étape (iii).

Selon l'étape (iii), la composition peut être appliquée sur un collecteur de courant par tous types de procédés d'application, par exemple, par coulage, impression ou enduction, par exemple, au rouleau.

L'étape (iii) peut être répétée typiquement une ou plusieurs fois, en fonction de l'épaisseur d'électrode souhaitée.

Les ingrédients de la composition peuvent répondre aux mêmes déclinaisons que celles déjà définies pour ces mêmes ingrédients dans le cadre de la description des électrodes en tant que telles.

Il est à noter que la composition comprend, avantageusement, un solvant organique choisi de sorte à permettre la solubilisation du ou des polymères gélifiants (FF), ce solvant organique pouvant être celui de l'électrolyte liquide ou pouvant être ajouté en plus des autres ingrédients mentionnés ci-dessus.

Pour garantir des propriétés homogènes à toutes les électrodes positives et négatives de l'accumulateur, celles-ci peuvent être issues d'une même couche de dépôt (avec une composition donnée pour l'électrode positive et une composition donnée pour l'électrode négative) déposée sur un substrat composé du matériau constitutif des différents collecteurs de courant suivi d'une découpe appropriée de ce substrat pour fournir les différents collecteurs de courant revêtus d'électrode(s).

Ainsi revêtus, les différents collecteurs de courant peuvent être munis de languettes métalliques pour assurer la reprise de courant, lorsqu'il s'agit des collecteurs de courant terminaux ou pour le contrôle de la tension, lorsqu'il s'agit des collecteurs de courant bipolaires et peuvent être revêtus d'une couche de matériau isolant sur leur bord libre et/ou sur les languettes comme cela est déjà décrit plus haut.

Les membranes, lorsqu'elles répondent à la définition spécifique donnée ci-dessus sont susceptibles d'être obtenues par un procédé comprenant une étape d'hydrolyse-condensation, en présence d'un électrolyte liquide et d'un polymère fluoré (F) tels que définis ci-dessus, d'au moins un composé organométallique comprenant un élément métallique choisi parmi Si, Ti, Zr et les combinaisons de ceux-ci, une réaction se produisant, avantageusement entre le composé organométallique et le polymère fluoré (F), de plus amples détails étant donnés dans la demande internationale WO 2020/012123.

## BRÈVE DESCRIPTION DES FIGURES

D'autres avantages et caractéristiques de l'invention ressortiront du complément de la description détaillée qui suit, qui est donnée à titre d'illustration de l'invention et qui se réfère aux figures annexées dans lesquelles :

- [Fig. 1], déjà commentée, représente schématiquement une vue en coupe longitudinale d'un exemple classique d'un accumulateur à architecture bipolaire ;
- [Fig. 2] est un graphique illustrant l'évolution du potentiel U (en V vs $Li^+/Li$) en fonction de la capacité spécifique C (en $mAh.g^{-1}$) pour 6 cycles consécutifs (respectivement courbe 1 pour le cycle 1, courbe 2 pour le cycle 2, courbe 3 pour le cycle 3, courbe 4 pour le cycle 4, courbe 5 pour le cycle 5 et courbe 6 pour le cycle 6) de la pile bouton illustrée à l'exemple 1 ;
- [Fig. 3] est un graphique illustrant l'évolution du potentiel U (en V vs $Li^+/Li$) en fonction de la capacité spécifique C (en $mAh.g^{-1}$) pour 6 cycles consécutifs (respectivement courbe 1 pour le cycle 1, courbe 2 pour le cycle 2, courbe 3 pour le cycle 3, courbe 4 pour le cycle 4, courbe 5 pour le cycle 5 et courbe 6 pour le cycle 6).

## EXPOSÉ DÉTAILLÉ DE MODES DE RÉALISATION PARTICULIERS

EXEMPLE 1

Dans cet exemple est exposée la préparation d'un accumulateur au lithium à architecture bipolaire conforme à l'invention impliquant les étapes suivantes :

1) La préparation du matériau actif ;
2) La préparation des électrodes gélifiées ;
3) La préparation de la membrane gélifiée ;
4) La préparation de l'accumulateur.

1-Préparation du matériau actif

Dans un premier temps, il est préparé le matériau actif organique biredox destiné à entrer dans la constitution des électrodes, ce matériau répondant à la formule suivante :

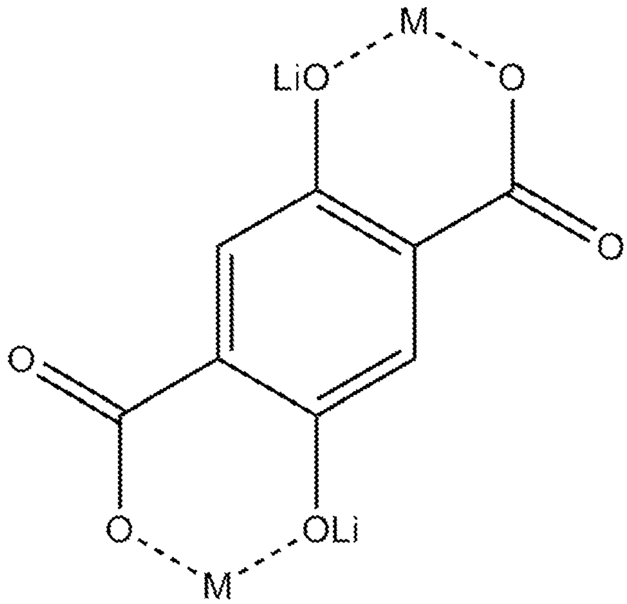

avec M représentant du magnésium.

Pour ce faire, 5,2 g d'acide dihydroxytéréphtalique sont dispersés dans 500 mL d'eau, auquel sont ajoutés 1,53 g d'hydroxyde de magnésium. La suspension est agitée pendant 48 heures à température ambiante avant élimination de l'eau sous pression réduite. Une poudre beige est obtenue avec un rendement quantitatif.

Ensuite, 1 g de la poudre obtenue précédemment est dispersé dans 25 mL d'eau dégazée, auquel sont ajoutés 2 équivalents d'hydroxyde de lithium sous atmosphère inerte. Le mélange est agité pendant 16 heures avec évaporation de l'eau sous pression réduite. Une poudre jaune est obtenue avec un rendement quantitatif. Elle est traitée sous vide à 235° C pendant 48 heures.

2-Préparation des électrodes gélifiées

Pour la préparation des encres destinées à la préparation des électrodes, le même polymère gélifiant est utilisé, que ce soit pour l'électrode positive ou l'électrode négative. Il s'agit du polymère comprenant des unités répétitives issues de la polymérisation du fluorure de vinylidène (96,7% en moles), d'acide acrylique (0,9% en moles) et d'hexafluoropropène (2,4 % en moles) et présentant une viscosité intrinsèque de 0,30 L/g dans du diméthylformamide à 25°C. Ce polymère est désigné ci-dessous par la terminologie « Polymère 1 ». Celui-ci est incorporé avec les autres ingrédients destinés à la fabrication des électrodes sous forme d'une solution d'acétone dans laquelle 10% de polymère 1 a été dissous à 60°C. Cette solution est refroidie à température ambiante et introduite en boîte à gants sous atmosphère d'argon ($O_2$ < 2 ppm, $H_2O$ < 2ppm).

Plus spécifiquement, du matériau actif, dont la préparation est explicitée au paragraphe 1- ci-dessous, et du carbone C-Nergy® C65 sont ajoutés à la solution d'acétone anhydre à 99,9% de pureté comprenant le polymère 1 et un électrolyte liquide composé d'un mélange de solvants carbonates (carbonate d'éthylène/carbonate de propylène 1/1) et du $LiPF_6$ (1M), de sorte à obtenir un rapport massique $(m_{électrolyte}/(m_{électrolyte} + m_{polymère\ 1}))*100$ égal à 85,7%, moyennant

quoi l'encre résultante comprend, au final, 65% de matériau actif, 15% de carbone C-Nergy® C65 et 20% de polymère 1.

L'encre est déposée par enduction sur un substrat en aluminium (plus précisément, un feuillard en aluminium d'épaisseur 20 $\mu$m.

Il est préparé conformément à ce protocole autant d'électrodes gélifiées que nécessaire pour la constitution de l'accumulateur bipolaire.

Par ailleurs, des électrodes gélifiées préparées conformément à ce protocole ont été testées dans une pile bouton avec pour séparateur, un séparateur comprenant la superposition d'une feuille en Viledon® et d'une feuille en Celgard®, le séparateur étant imbibé par un électrolyte liquide comprenant un mélange de solvants carbonates (carbonate d'éthylène/carbonate de propylène, 1/1) et du $LiPF_6$ (1M).

La pile bouton ainsi obtenue est soumise à un test galvanostatique à haut potentiel avec un balayage de potentiels allant de 2,5 à 4V vs $Li^+/Li$ à un courant constant correspondant à un régime de C/10, le matériau actif de l'électrode gélifiée subissant dans ce contexte une oxydation des groupes énolates de lithium en groupes carbonyles (ou autrement dit, subissant une délithiation), cette oxydation ou délithiation pouvant être schématisée par l'équation suivante :

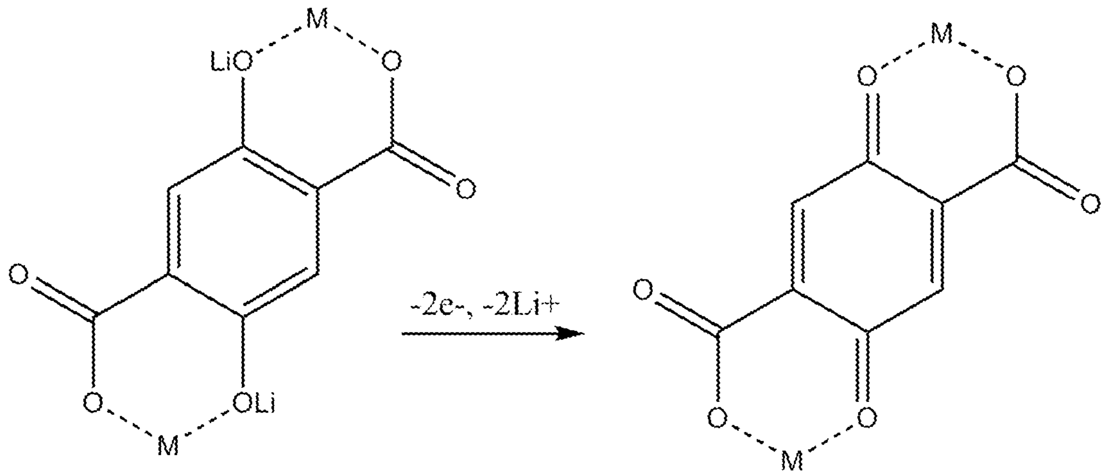


les résultats de ce test étant reportés sur la figure 2 illustrant l'évolution du potentiel U (en V vs $Li^+/Li$) en fonction de la capacité spécifique C (en $mAh.g^{-1}$) pour 6 cycles consécutifs (respectivement courbe 1 pour le cycle 1, courbe 2 pour le cycle 2, courbe 3 pour le cycle 3, courbe 4 pour le cycle 4, courbe 5 pour le cycle 5 et courbe 6 pour le cycle 6).

A partir du cycle 2, les courbes se superposent, ce qui atteste d'une stabilité des électrodes gélifiées et, qui plus est, l'allure des courbes démontre également la capacité des électrodes gélifiées à se comporter, à partir du même matériau actif, comme une électrode apte à céder des électrons.

3-Préparation de la membrane gélifiée

La membrane gélifiée est constituée d'un copolymère hybride organique/inorganique à base de PVdF-HFP modifié comportant des ramifications méthacryliques (PVdF-HEA-HFP) dans lequel une réaction sol-gel est opérée à partir du tétraéthoxysilane (TEOS).

Elle est obtenue par enduction d'une solution polymérique sur un substrat en polytéréphtalate d'éthylène (PET) puis décollée de ce substrat du fait qu'elle est autosupportée.

a) Préparation de la solution polymérique

Pour ce faire, 10 g d'un copolymère comprenant des unités répétitives issues de la polymérisation du fluorure de vinylidène (VDF), de l'acrylate de 2-hydroxyéthyle (HEA) et d'hexafluoropropène (HFP), ce polymère étant dénommé PVdF-HEA-HFP (VDF 96,8% en mole-HEA 0,8% en mole et HFP 2,4% en mole) et présentant une viscosité intrinsèque de 0,08 g/L sont introduits dans un réacteur de synthèse double parois de 300 mL préalablement inerté à l'argon puis sont ajoutés 67 mL d'acétone anhydre à 99,9% de pureté. Le mélange est agité mécaniquement pendant 30 min à 60°C sous flux d'argon. Ensuite 0,10 g de dilaurate de dibutylétain (DBTL) sont ajoutés et le mélange résultant est agité pendant 90 minutes à 60°C sous flux d'argon. 0,40 g de 3-(triéthoxysilyl)propyl isocyanate (TSPI) sont ensuite ajoutés et le mélange est agité pendant 90 minutes à 60°C sous flux d'argon. 37,50 g d'électrolyte de composition identique à celle utilisée pour les électrodes est ajouté et le mélange est agité pendant 30 min à 60°C sous flux d'argon. 2,50 g d'acide formique sont ensuite ajoutés et le mélange est agité pendant 30 minutes à 60°C sous flux d'argon. Enfin 3,47 g de tétraéthoxysilane sont

ajoutés et le mélange est agité pendant 30 minutes à 60°C sous flux d'argon.

b) Préparation des membranes à partir de la solution polymérique

Une fois préparée, la solution polymérique est transférée dans un flacon étanche en salle anhydre (point de rosée -20°C à 22°C). Elle est alors enduite à l'aide d'une machine d'enduction R2R (« Roll to roll slot die coating machine, Ingecal tailored made »), la solution étant introduite dans la machine à température ambiante mais dans un environnement contrôlé avec un point de rosée de -20°C à 22°C. Les paramètres d'utilisation de la machine sont les suivants :

- Vitesse de ligne : 1 m/min ;
- Section de séchage : 40°C pour la première et deuxième zone ; 50°C pour la troisième zone et 60°C pour la quatrième zone ;
- Ouverture de la fente en extrusion : 300 μm, ce qui permet d'obtenir une membrane d'environ 50 μm déposé sur un substrat en polytéréphtalate d'éthylène (PET).

La bande de membrane ainsi obtenue est alors stockée dans une poche étanche thermoscellée en attendant de procéder à l'assemblage de l'accumulateur bipolaire.

4-Préparation de l'accumulateur bipolaire

Deux électrodes préparées conformément au protocole du paragraphe 2 sont accolées *via* leur substrat collecteur de courant pour former une électrode biface comprenant un substrat collecteur de courant bipolaire résultant de l'accolement des deux substrats collecteurs de courant et, sur une face du substrat collecteur de courant bipolaire, une électrode et sur la face opposée du substrat collecteur de courant bipolaire, une autre électrode.

Deux membranes de dimensions 34mm x 34mm sont découpées à partir de la bande de membrane préparée préalablement et déposées sur les 2 faces du collecteur de courant bipolaire revêtu des électrodes. Deux électrodes préparées conformément au protocole du paragraphe 2 sont alors placées contre les membranes, en face de chaque électrode de polarité opposée du collecteur de courant bipolaire, ces deux électrodes constituant les électrodes terminales. Le cœur électrochimique bipolaire à deux compartiments est alors fixé dans un emballage souple.

L'accumulateur bipolaire ainsi obtenue est soumis à un test galvanostatique avec un balayage de potentiels allant de 1 à 6 V vs $Li^+/Li$ à un courant constant correspondant à un régime de C/10, les résultats de ce test étant reportés sur la figure 3 illustrant l'évolution du potentiel U (en V vs $Li^+/Li$) en fonction de la capacité spécifique C (en $mAh.g^{-1}$) pour 6 cycles consécutifs (respectivement, courbe 1 pour le cycle 1, courbe 2 pour le cycle 2, courbe 3 pour le cycle 3, courbe 4 pour le cycle 4, courbe 5 pour le cycle 5 et courbe 6 pour le cycle 6).

A partir du cycle 2, les courbes sont similaires, ce qui atteste d'une stabilité des électrodes gélifiées et, qui plus est, l'allure des courbes atteste de la capacité des électrodes gélifiées à se comporter, à partir du même matériau actif, à la fois comme électrode positive et comme électrode négative.

## Revendications

1. Accumulateur à architecture bipolaire qui comprend deux collecteurs de courant terminaux entre lesquels est disposé un empilement de n cellules électrochimiques, n étant un entier au moins égal à 2, dans lequel :

   - chaque cellule électrochimique comprend une électrode positive, une électrode négative et un constituant électrolytique disposé entre l'électrode positive et l'électrode négative ;
   - les n cellules électrochimiques sont séparées les unes des autres par (n-1) collecteurs de courant bipolaires ;

   et qui est **caractérisé en ce que** l'électrode positive et l'électrode négative de chaque cellule électrochimique comprennent, comme matériau actif, un matériau actif commun, qui est un composé redox organique comprenant, respectivement, au moins un groupe apte à capter des électrons et au moins un groupe à céder des électrons.

2. Accumulateur selon la revendication 1, dans lequel le composé redox est un composé redox, dans lequel le ou les groupes aptes à capter des électrons sont :

   - des groupes carbonyles conjugués ;
   - des groupes carboxylates ;
   - des groupes disulfures ;

- des groupes azoïques ;
- des groupes imides ; ou
- des groupes hétéroatomatiques ;

et/ou dans lequel le ou les groupes aptes à céder des électrons sont :

- des groupes énoliques ou énolates ;
- des groupes nitroxydes ;
- des groupes thioéthers ; ou
- des groupes amines aromatiques.

**3.** Accumulateur selon la revendication 1 ou 2, dans lequel le composé redox est un composé comprenant, à la fois, au moins un groupe choisi parmi les groupes carbonyles conjugués, les groupes carboxylates, les groupes disulfures et au moins un groupe choisi parmi les groupes énoliques ou énolates, les groupes nitroxydes et les groupes thioéthers.

**4.** Accumulateur selon l'une quelconque des revendications précédentes, dans lequel le composé redox est un composé quinone, qui est un composé quinone substitué par au moins un substituant comprenant au moins un groupe apte à céder des électrons.

**5.** Accumulateur selon l'une quelconque des revendications précédentes, dans lequel le composé redox est un composé quinone choisi parmi les composés benzoquinones, les composés naphtoquinones et les composés anthraquinones, ces composés comprenant au moins un substituant comprenant au moins un groupe apte à céder des électrons.

**6.** Accumulateur selon l'une quelconque des revendications 1 à 3, dans lequel le composé redox est un composé quinone sous forme énolate, substitué par au moins un groupe apte à capter des électrons.

**7.** Accumulateur selon l'une quelconque des revendications 1 à 3 et 6, dans lequel le composé redox est un composé benzoquinone sous forme énolate substitué par au moins un groupe carboxylate.

**8.** Accumulateur selon l'une quelconque des revendications 1 à 3 et 6 ou 7, dans lequel le composé redox est un composé de formule (VIII) suivante :

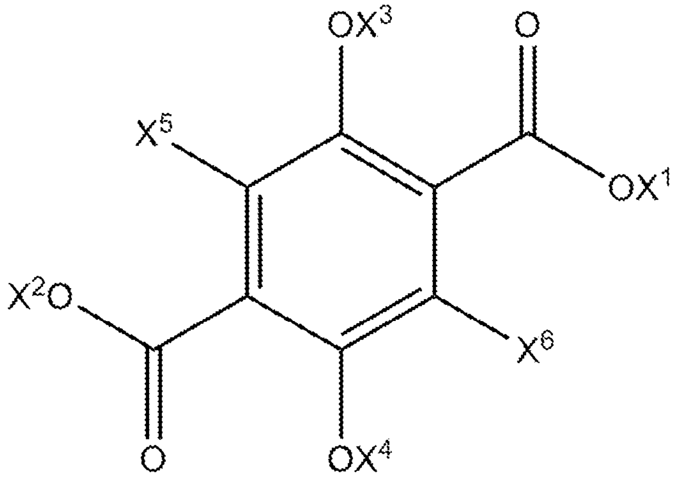

(VIII)

dans laquelle $X^1$ à $X^4$ représentent, indépendamment l'un de l'autre, un cation et $X^5$ et $X^6$ représentent, indépendamment, l'un de l'autre, un atome d'hydrogène ou un groupe $-SO_3H$.

9. Accumulateur selon l'une quelconque des revendications précédentes, dans lequel les électrodes négatives et les électrodes positives de l'accumulateur comprennent, en outre, des additifs conducteurs électroniques et éventuellement un ou plusieurs liants organiques.

10. Accumulateur selon l'une quelconque des revendications précédentes, dans lequel les électrodes négatives et les électrodes positives sont des électrodes gélifiées.

11. Accumulateur selon la revendication 10, dans lequel les électrodes gélifiées comprennent un matériau composite comprenant une matrice polymérique en au moins un polymère gélifiant (FF) au contact d'un électrolyte liquide, le matériau actif d'électrode et éventuellement un ou plusieurs additifs conducteurs électroniques, l'électrolyte liquide étant confiné au sein de la matrice polymérique.

12. Accumulateur selon l'une quelconque des revendications précédentes, dans lequel le constituant électrolytique est un électrolyte liquide confiné au sein d'une membrane polymère gélifiée.

13. Accumulateur selon la revendication 12, dans lequel la membrane polymère gélifiée comprend une partie organique comprenant au moins un polymère fluoré (F) comprenant au moins une unité répétitive issue de la polymérisation d'un monomère fluoré et au moins une unité répétitive issue de la polymérisation d'un monomère comprenant au moins un groupe hydroxyle, éventuellement sous forme d'un sel, et comprenant une partie inorganique formée, en tout ou partie, d'un ou plusieurs oxydes d'au moins un élément M choisi parmi Si, Ti et Zr et les combinaisons de ceux-ci.

**Patentansprüche**

1. Akkumulator mit bipolarer Architektur, der zwei Endstromabnehmer umfasst, zwischen denen ein Stapel von n elektrochemischen Zellen angeordnet ist, wobei n eine Ganzzahl von mindestens 2 ist, wobei:

   - jede elektrochemische Zelle eine positive Elektrode, eine negative Elektrode und einen Elektrolytbestandteil, der zwischen der positiven Elektrode und der negativen Elektrode angeordnet ist, umfasst;
   - die n elektrochemischen Zellen durch (n-1) bipolare Stromabnehmer voneinander getrennt sind;

   und **dadurch gekennzeichnet ist, dass** die positive Elektrode und die negative Elektrode jeder elektrochemischen Zelle als aktives Material ein gemeinsames aktives Material umfassen, das eine organische Redoxverbindung ist, die jeweils mindestens eine elektronenaufnehmende und mindestens eine elektronenabgebende Gruppe umfasst.

2. Akkumulator nach Anspruch 1, wobei die Redoxverbindung eine Redoxverbindung ist, bei der die Gruppe oder die Gruppen, die geeignet sind, Elektronen aufzunehmen, folgende sind:

   - konjugierte Carbonylgruppen;
   - Carboxylatgruppen;
   - Disulfidgruppen;
   - Azogruppen;
   - Imidgruppen; oder
   - heteroatomatische Gruppen;

   und/oder wobei die elektronenabgebende(n) Gruppe(n) folgende sind:

   - enolische oder enolierte Gruppen;
   - Nitroxidgruppen;
   - Thioethergruppen; oder
   - aromatische Amine.

3. Akkumulator nach Anspruch 1 oder 2, wobei die Redoxverbindung eine Verbindung ist, die sowohl mindestens eine Gruppe, ausgewählt aus konjugierten Carbonylgruppen, Carboxylatgruppen, Disulfidgruppen, als auch mindestens eine Gruppe, ausgewählt aus Enol- oder Enolatgruppen, Nitroxidgruppen und Thioethergruppen, umfasst.

4. Akkumulator nach einem der vorhergehenden Ansprüche, wobei die Redoxverbindung eine Chinonverbindung ist, die eine Chinonverbindung ist, die durch mindestens einen Substituenten ersetzt wird, der mindstens eine elektronenabgebende Gruppe umfasst.

**5.** Akkumulator nach einem der vorhergehenden Ansprüche, wobei die Redoxverbindung eine Chinonverbindung ist, die aus Benzochinonverbindungen, Naphthochinonverbindungen und Anthrachinonverbindungen ausgewählt ist, wobei diese Verbindungen mindestens einen Substituenten umfassen, der mindestens eine elektronenabgebende Gruppe umfasst.

**6.** Akkumulator nach einem der Ansprüche 1 bis 3, wobei die Redoxverbindung eine Quinonverbindung in enolater Form ist, die durch mindestens eine Gruppe ersetzt wird, die geeignet ist, Elektronen aufzunehmen.

**7.** Akkumulator nach einem der Ansprüche 1 bis 3 und 6, wobei die Redoxverbindung eine Benzochinonverbindung in Enolatform ist, die durch mindestens eine Carboxylatgruppe substituiert ist.

**8.** Akkumulator nach einem der Ansprüche 1 bis 3 und 6 oder 7, wobei die Redoxverbindung eine Verbindung mit folgender Formel (VIII) ist:

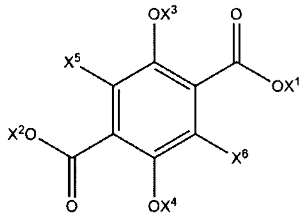

(VIII)

wobei $X^1$ bis $X^4$ unabhängig voneinander ein Kation und $X^5$ und $X^6$ unabhängig voneinander ein Wasserstoffatom oder eine $-SO_3$ H-Gruppe darstellen.

**9.** Akkumulator nach einem der vorhergehenden Ansprüche, wobei die negativen Elektroden und die positiven Elektroden des Akkumulators ferner elektronisch leitfähige Additive und gegebenenfalls ein oder mehrere organische Bindemittel umfassen.

**10.** Akkumulator nach einem der vorhergehenden Ansprüche, wobei die negativen Elektroden und die positiven Elektroden gelierte Elektroden sind.

**11.** Akkumulator nach Anspruch 10, wobei die gelierten Elektroden ein Verbundmaterial umfassen, das eine Polymermatrix aus mindestens einem gelbildenden Polymer (FF) in Kontakt mit einem flüssigen Elektrolyten, das aktive Elektrodenmaterial und gegebenenfalls ein oder mehrere elektrisch leitfähige Additive umfasst, wobei das flüssige Elektrolyt innerhalb der Polymermatrix eingeschlossen ist.

**12.** Akkumulator nach einem der vorhergehenden Ansprüche, wobei der Elektrolytbestandteil ein flüssiges Elektrolyt ist, der in einer gelierten Polymermembran eingeschlossen ist.

**13.** Akkumulator nach Anspruch 12, wobei die gelierte Polymermembran einen organischen Teil umfasst, der mindestens ein Fluorpolymer (F) umfasst, das mindestens eine sich wiederholende Einheit aus der Polymerisation eines Fluormonomers und mindestens eine sich wiederholende Einheit aus der Polymerisation eines Monomers umfasst, die mindestens eine Hydroxylgruppe umfasst, gegebenenfalls in Form eines Salzes, und einen anorganischen Teil umfasst, der ganz oder teilweise aus einem oder mehreren Oxiden mindestens eines Elements M besteht, das aus Si, Ti und Zr und deren Kombinationen ausgewählt ist.

## Claims

**1.** A bipolar architecture accumulator which comprises two end current collectors between which a stack of n electrochemical cells is disposed, n being an integer at least equal to 2, wherein:

- each electrochemical cell comprises a positive electrode, a negative electrode and an electrolytic component disposed between the positive electrode and the negative electrode;
- the n electrochemical cells are separated from each other by (n-1) bipolar current collectors;

and which is **characterised in that** the positive electrode and the negative electrode of each electrochemical cell comprise, as an active material, a common active material, which is an organic redox compound comprising, respectively, at least one group capable of withdrawing electrons and at least one group capable of donating electrons.

**2.** The accumulator according to claim 1, wherein the redox compound is a redox compound, wherein the group(s) capable of withdrawing electrons are:

- conjugated carbonyl groups;
- carboxylate groups;
- disulfide groups;
- azo groups;
- imide groups; or
- heteroatomic groups;

and/or wherein the group(s) capable of donating electrons are:

- enolic or enolate groups;
- nitroxide groups;
- thioether groups; or
- aromatic amine groups.

**3.** The accumulator according to claim 1 or 2, wherein the redox compound is a compound comprising both at least one group selected from conjugated carbonyl groups, carboxylate groups, disulfide groups, and at least one group selected from enolic or enolate groups, nitroxide groups and thioether groups.

**4.** The accumulator according to any one of the preceding claims, wherein the redox compound is a quinone compound, which is a quinone compound substituted with at least one substituent comprising at least one group capable of donating electrons.

**5.** The accumulator according to any one of the preceding claims, wherein the redox compound is a quinone compound selected from benzoquinone compounds, naphtoquinone compounds, and anthraquinone compounds, these compounds comprising at least one substituent comprising at least one group capable of donating electrons.

**6.** The accumulator according to any one of claims 1 to 3, wherein the redox compound is a quinone compound in enolate form, substituted with at least one group capable of withdrawing electrons.

**7.** The accumulator according to any one of claims 1 to 3 and 6, wherein the redox compound is a benzoquinone compound in enolate form substituted with at least one carboxylate group.

**8.** The accumulator according to any one of claims 1 to 3 and 6 or 7, wherein the redox compound is a compound of the following formula (VIII):

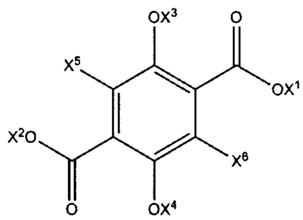

(VIII)

wherein $X^1$ to $X^4$ represent, independently of each other, a cation and $X^5$ and $X^6$ represent, independently of each

other, a hydrogen atom or a -$SO_3H$ group.

**9.** The accumulator according to any one of the preceding claims, wherein the negative electrodes and the positive electrodes of the accumulator further comprise electron conducting additives and optionally one or more organic binders.

**10.** The accumulator according to any one of the preceding claims, wherein the negative electrodes and the positive electrodes are gelled electrodes.

**11.** The accumulator according to claim 10, wherein the gelled electrodes comprise a composite material comprising a polymeric matrix of at least one gelling polymer (FF) in contact with a liquid electrolyte, the electrode active material and optionally one or more electron conductive additives, the liquid electrolyte being confined within the polymeric matrix.

**12.** The accumulator according to any one of the preceding claims, wherein the electrolyte component is a liquid electrolyte confined within a gelled polymer membrane.

**13.** The accumulator according to claim 12, wherein the gelled polymer membrane comprises an organic part comprising at least one fluorinated polymer (F) comprising at least one repeating unit derived from the polymerisation of a fluorinated monomer and at least one repeating unit derived from the polymerisation of a monomer comprising at least one hydroxyl group, optionally in the salt form, and comprising an inorganic part formed, in whole or in part, of one or more oxides of at least one element M selected from Si, Ti and Zr and combinations thereof.

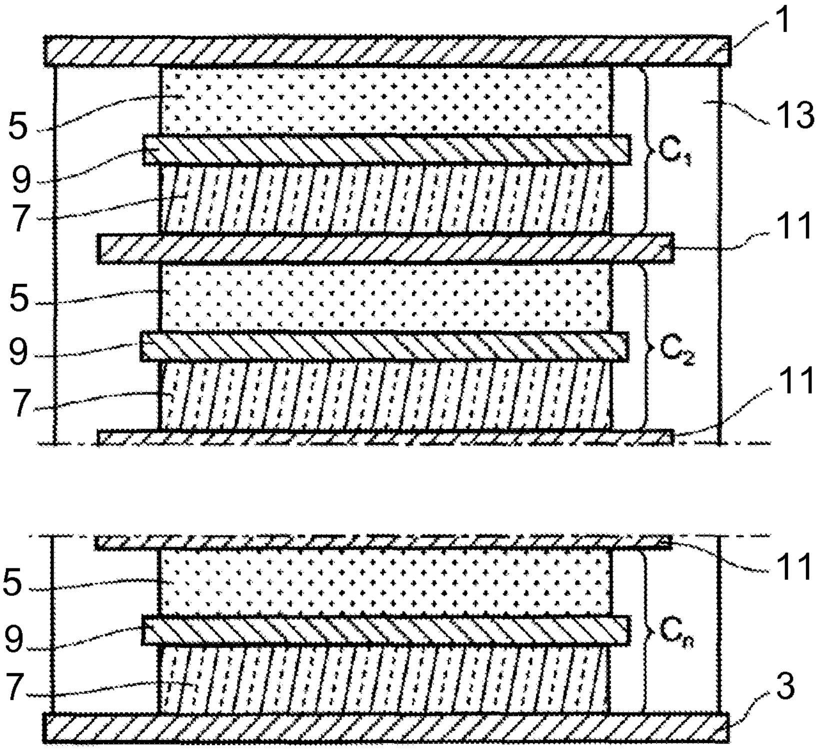


FIG. 1

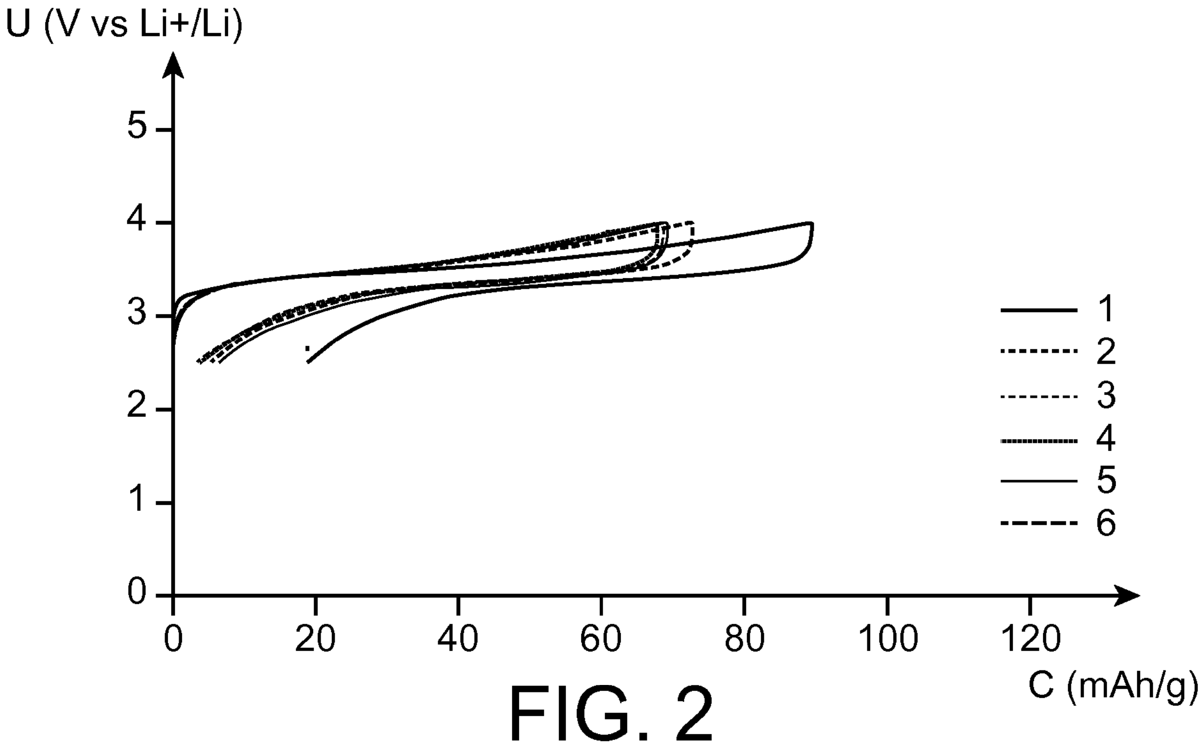
U (V vs Li+/Li)
5
4
3
2
1
0
0
20
40
60
80
100
120
C (mAh/g)
1
2
3
4
5
6

FIG. 2

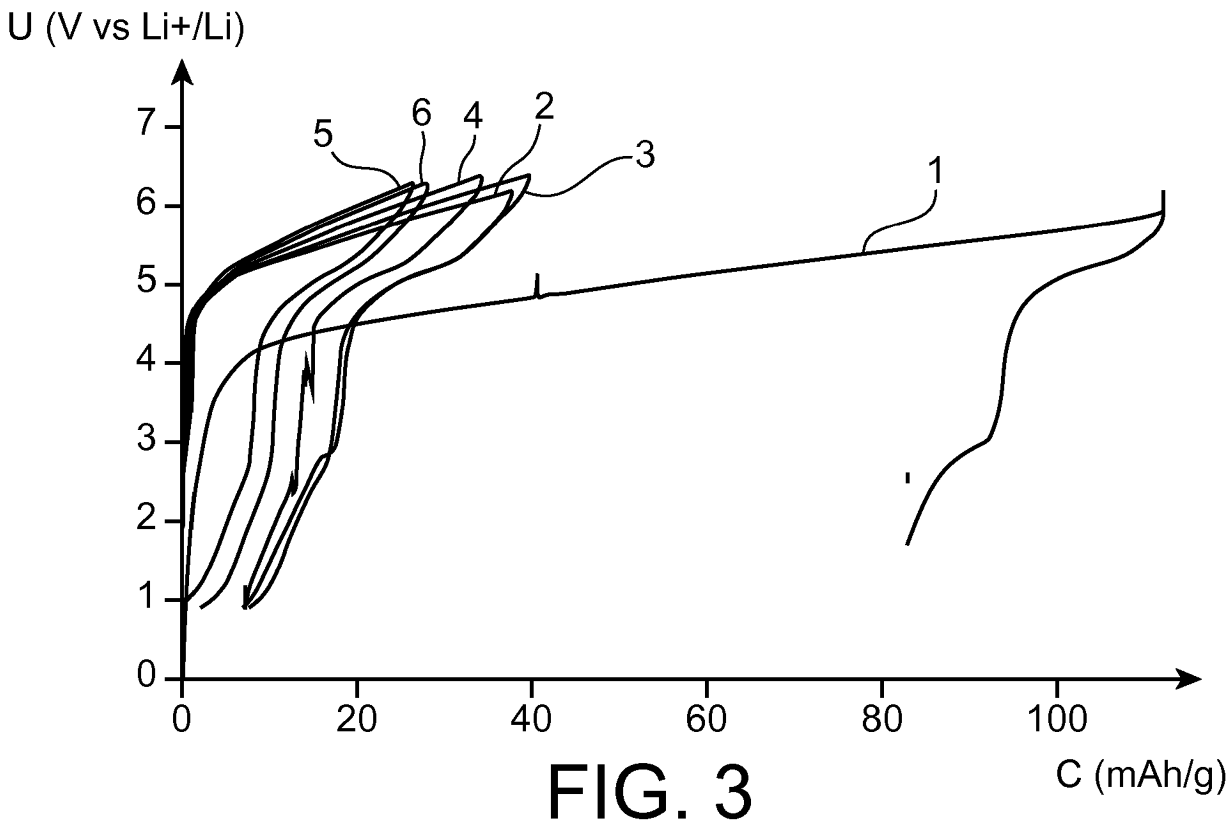
U (V vs Li+/Li)
7
6
5
4
3
2
1
0
0
20
40
60
80
100
C (mAh/g)
5
6
4
2
3
1

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 2016076342 A
- CN 103035942 A
- WO 2013072216 A
- WO 2020012123 A


### Littérature non-brevet citée dans la description


- **NOBUHIRO OGIHARA et al.** Organic Dicarboxylate Negative Electrode Materials with Remarkably Small Strain for High-voltage Bipolar Batteries. *Angewandte Chemie International Edition*, 2014, vol. 53 (43), 11467-11472
- **TONG LIUCHUAN et al.** Symmetric All-Quinone Aqueous Battery. *ACS Applied Energy Materials*, 2019, vol. 2 (6), 4016-4021